# EUROPEAN PATENT SPECIFICATION

(11) **EP 3 761 081 B1**
(45) Date of publication and mention of the grant of the patent: **07.08.2024**
(21) Application number: 18907851.2
(22) Date of filing: 17.12.2018
(51) Int. Cl.: G02B 5/22, G02C 7/10, D06P 5/00, B29D 11/00, G02C 7/00

(54) **METHOD FOR MANUFACTURING MULTIFUNCTIONAL RESIN BODY**
VERFAHREN ZUR HERSTELLUNG EINES MULTIFUNKTIONALEN HARZKÖRPERS
PROCÉDÉ DE FABRICATION D'UN CORPS EN RÉSINE MULTIFONCTIONNELLE

(30) Priority: 28.02.2018 JP 2018035048
(43) Date of publication of application: 06.01.2021
(73) Proprietor: Nidek Co., Ltd., Gamagori-shi, Aichi, 443-0038 (JP)
(72) Inventor: ABE, Koji, Gamagori-shi Aichi 443-0038 (JP); ISOGAI, Naohide, Gamagori-shi Aichi 443-0038 (JP); INUZUKA, Minoru, Gamagori-shi Aichi 443-0038 (JP); SHIBAMOTO, Takahisa, Gamagori-shi Aichi 443-0038 (JP)
(74) Representative: Hoefer & Partner Patentanwälte mbB
(86) International application number: PCT/JP2018/046331
(87) International publication number: WO 2019/167387

(56) References cited:
- JP-A- 2001 215 306
- JP-A- 2002 258 003
- JP-A- 2006 154 783
- JP-A- 2012 177 909
- JP-A- 2015 148 673
- JP-A- 2017 015 761
- JP-A- 2017 015 761

## Description

### Technical Field

The present disclosure relates to a method for manufacturing a multifunctional resin body that reduces optical transmittance in a plurality of wavelength ranges.

### Background Art

In the related art, there has been a functional resin body that has an excellent influence on a human body by reducing optical transmittance in a specific wavelength range in a resin body. The functional resin body is exemplified by a functional lens that reduces transmittance in a specific wavelength range. For example, as the functional resin body, there has been one that reduces optical transmittance such as ultraviolet light, infrared light, and blue light. In recent years, a multifunctional resin body that reduces optical transmittance in a plurality of specific wavelength ranges has also been demanded (for example, Patent Literature 1). In the related art, for example, as a method for manufacturing such a multifunctional resin body, a method of forming a multilayer film on a resin body is used. Further related art describes a dyeing method wherein both sides, front side and backside, of a lens get dyed and thereafter the lens with the applied dye gets heated in order to fix the dye onto the lens (for example Patent Literature 2). Further related art describes a dying method in order to apply a dye to a lens (for example, Patent Literature 3).

### Citation List

### Patent Literature

Patent Literature 1: JP-A-2014-199327
Patent Literature 2: JP-A-2012-177909
Patent Literature 3: JP-A -2017-015761

### Summary of Invention

When a multifunctional resin body that reduces optical transmittance in a plurality of specific wavelength ranges is manufactured by a method in the related art, a crack may occur, and it may be not possible to manufacture an excellent multifunctional resin body. In addition, it is necessary to perform many processes and complicated operations in order to form a multilayer film, which takes time and time.

In view of the above problems, an object of the present disclosure is to provide a method for manufacturing a functional resin body, which enables to easily manufacture an excellent multifunctional resin body.

In order to solve the above problems, the present invention has the following configurations.
(1) A method for manufacturing a multifunctional resin body according to a first aspect of the present disclosure is a method for manufacturing a multifunctional resin body that reduces optical transmittance in a plurality of wavelength ranges. The method includes: a first step of applying a first functional dye, which absorbs light in a first wavelength range and has sublimability, to a base body to obtain a first function-adding base body; a second step of setting the first function-adding base body obtained in the first step to face a functional resin body having a function of reducing optical transmittance in a second wavelength range being a wavelength range different from the first wavelength range, of heating the first function-adding base body to sublimate the first functional dye applied to the first function-adding base body, and of depositing the first functional dye on the functional resin body; and a third step of heating the functional resin body on which the first functional dye is deposited in the second step to fix the first functional dye on the functional resin body. A multifunctional resin body that reduces optical transmittance in a plurality of wavelength ranges is obtained by adding a function of reducing the optical transmittance in the first wavelength range to the functional resin body with using the first functional dye.
The method further includes: a fourth step of applying a second functional dye, which absorbs light in the second wavelength range, to a base body to obtain a second function-adding base body; a fifth step of setting the second function-adding base body obtained in the fourth step to face a resin body, of heating the second function-adding base body to sublimate the second functional dye applied to the second function-adding base body, and of depositing the second functional dye on the resin body; and a sixth step of heating the resin body on which the second functional dye is deposited in the fifth step to fix the second functional dye on the resin body. The functional resin body, on which the first functional dye deposits in the second step, is obtained by performing the fourth to sixth steps to add a function of reducing the optical transmittance in the second wavelength range to the resin body with using the second functional dye.

### Brief Description of Drawings

[Fig. 1] Fig. 1 is a flowchart showing a flow of a method for manufacturing a multifunctional resin body of the present embodiment.
[Fig. 2] Fig. 2 is a schematic view showing a manufacturing system used in the method for manufacturing the multifunctional resin body of the present embodiment.
[Fig. 3] Fig. 3 is a flowchart showing a flow of a method for manufacturing a functional resin body of the present embodiment.
[Fig. 4] Fig. 4 is a schematic view showing a manufacturing system used in the method for manufacturing the functional resin body of the present embodiment.

### Description of Embodiments

### <Manufacturing System of Multifunctional Resin Body>

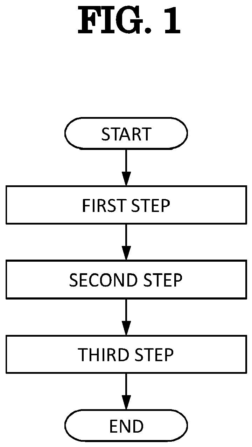

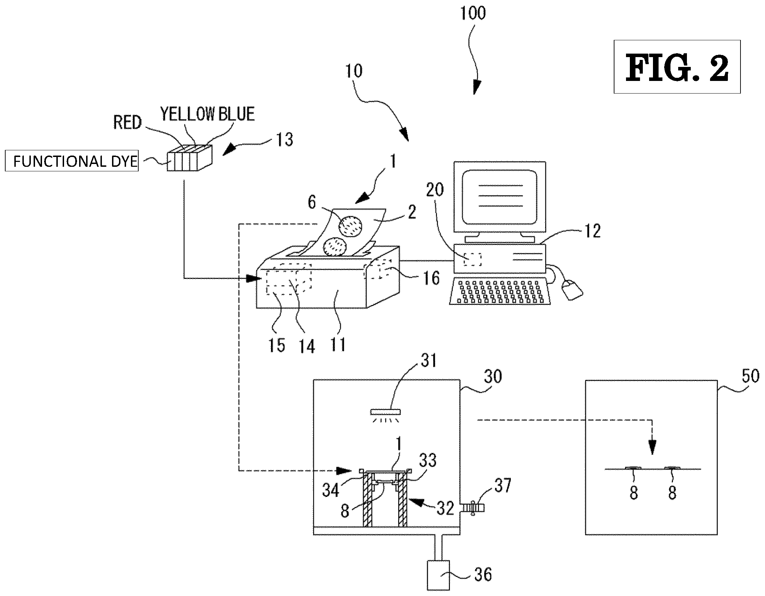

Hereinafter, exemplary embodiments of the present disclosure will be described. For example, Fig. 1 is a flowchart showing a flow of a method for manufacturing a multifunctional resin body of the present embodiment. For example, Fig. 2 is a schematic view showing a manufacturing system used in the method for manufacturing the multifunctional resin body of the present embodiment. For example, in the present embodiment, a functional resin body having a function of reducing optical transmittance in a specific wavelength range is further provided with a function of reducing optical transmittance in a specific wavelength range by using a vapor phase transfer dyeing method, thereby manufacturing a multifunctional resin body. For example, the functional resin body having the function of reducing the optical transmittance in the specific wavelength range may have a characteristic function such that the optical transmittance in the specific wavelength range is equal to or less than a predetermined threshold. Hereinafter, a lens which is one of resin bodies will be described as an example of the resin body. That is, a functional lens 8 having a function of reducing optical transmittance in a specific wavelength range will be described as an example.

Of course, the technology exemplified below can also be applied to a case where photochromic performance is added by using a vapor phase transfer dyeing method with respect to a functional resin body other than the functional lens 8 (for example, a functional molded article such as goggles, a functional cover of a mobile phone, a functional cover for light, a functional accessory, a functional toy, a functional film (having a thickness of, for example, 400 µm or less), and a functional plate material (having a thickness of, for example, 400 µm or more)), so as to further add a function, thereby manufacturing a multifunctional resin body that reduces optical transmittance in a plurality of wavelength ranges. The function-adding base body 1 exemplified below can also be used in a transfer dyeing step other than the vapor phase transfer dyeing.

According to the present embodiment, it is also possible to add a function to a functional resin body containing as a material at least any one of polycarbonate-based resin (e.g., diethylene glycol bis-allyl carbonate polymer (CR-39)), polyurethane-based resin (Trivex), allyl-based resin (e.g., allyl diglycol carbonate and copolymer thereof, diallyl phthalate and copolymer thereof), fumarate-based resin (e.g., benzyl fumarate copolymer), stylene-based resin, polymethyl acrylate-based resin, fiber-based resin (e.g., cellulose propionate), highly refractive material such as thiourethane-based or thioepoxy, and nylon-based resin (polyamide-based resin). For example, the functional resin body may be coated with a receiving film to which the functional dye can be easily fixed. By coating the functional resin body with the receiving film, it is possible to easily perform addition of the function.

In the method for manufacturing a multifunctional resin body of the present embodiment, a first step, a second step, and a third step are performed. The method for manufacturing a multifunctional resin body of the present embodiment is performed in an order of the first step, the second step, and the third step. The first step is a step of applying a first functional dye, which absorbs light in a first wavelength range and has sublimability, to a base body (for example, a base body 2) to obtain a first function-adding base body (for example, a function-adding base body 1). The second step is a step of setting the first function-adding base body obtained in the first step to face a functional resin body (for example, a functional lens 8) having a function of reducing optical transmittance in a second wavelength range being a wavelength range different from the first wavelength range, of heating the first function-adding base body to sublimate the first functional dye applied to the first function-adding base body, and of depositing the first functional dye on the functional resin body. The third step is a step of heating the functional resin body on which the first functional dye is deposited in the second step to fix the first functional dye on the functional resin body. The method for manufacturing the multifunctional resin body including the first step, the second step, and the third step, a multifunctional resin body that reduces optical transmittance in a plurality of wavelength ranges is obtained by adding a function of reducing the optical transmittance in the first wavelength range to the functional resin body with using the first functional dye. Thus, for example, the multifunctional resin body that reduces the optical transmittance in the plurality of wavelength ranges can be easily manufactured without requiring many steps or complicated operations. In addition, for example, an excellent multifunctional resin body in which cracks are prevented can be manufactured.

In addition, for example, it is possible to prevent variation in optical transmittance in the multifunctional resin body. Further, for example, since a combination of the plurality of wavelength ranges can be changed, it is possible to easily manufacture a variety of multifunctional resin bodies capable of reducing optical transmittance in a plurality of wavelength ranges. That is, for example, since a functional resin body that reduces optical transmittance in a specific wavelength range can be added with a function of reducing optical transmittance in another wavelength range, it is possible to easily manufacture a variety of multifunctional resin bodies capable of reducing the optical transmittance in a plurality of wavelength ranges.

For example, in the present embodiment, a manufacturing system 100 is used to perform each step in the method for manufacturing a multifunctional resin body. For example, a schematic configuration of the manufacturing system 100 according to the present embodiment will be described with reference to Fig. 2. The manufacturing system 100 of the present embodiment includes a dye applying apparatus 10, a deposition apparatus 30, and a dye fixing apparatus (fixing apparatus) 50.

For example, in the first step, the dye applying apparatus 10 is used. For example, the dye applying apparatus 10 is used to apply a first functional dye, which absorbs light in a first wavelength range and is deposited on a functional resin body (the functional lens 8 in the present embodiment), to the base body 2 to obtain the function-adding base body 1 to which the first functional dye is applied. For example, in the second step, the deposition apparatus 30 is used. For example, the deposition apparatus 30 is used to set the function-adding base body 1 to face the functional lens 8 having a function of reducing optical transmittance in a second wavelength range being a wavelength range different from the first wavelength range, to heat the function-adding base body 1 to sublimate a sublimable dye applied to the function-adding base body 1, and to deposit the sublimable dye on the functional lens 8. For example, in the third step, the fixing apparatus 50 is used. For example, the fixing apparatus 50 is used to heat the functional lens 8 on which the first functional dye is deposited to fix the first functional dye on the functional lens 8.

For example, at least one functional dye may be used as the functional dye. That is, for example, in the present embodiment, a function of reducing optical transmittance in at least one specific wavelength range may be added to the functional resin body. In this case, for example, one functional dye may be used. Further, in this case, for example, a plurality of functional dyes (for example, two functional dyes, three functional dyes, four functional dyes, or the like) may be used.

For example, in a case of using a plurality of functional dyes, in the first step, the first function-adding base body may be obtained by further applying a third functional dye, which absorbs light in a third wavelength range being a wavelength range different from the first wavelength range and the second wavelength range, to the base body. In this case, for example, the third functional dye applied to the first function-adding base body may be sublimated to deposit the third functional dye on the functional resin body. In this case, for example, the third step may be a step of heating the functional resin body having the first functional dye deposited thereon in the second step to fix the third functional dye on the functional resin body. As described above, for example, in the method for manufacturing a multifunctional resin body according to the present embodiment, a multifunctional resin body that reduces optical transmittance in a plurality of wavelength ranges may be obtained by adding a function of reducing the optical transmittance in the first wavelength range and the third wavelength range to the functional resin body. As a result, functions for reducing optical transmittance in a plurality of wavelength ranges can be simultaneously added to the functional resin body, and a multifunctional resin body can be manufactured easily and smoothly.

For example, in a case where a plurality of functional dyes are used for the functional resin body, the first step may be configured to simultaneously apply the plurality of functional dyes to the base body. Further, for example, in a case where a plurality of functional dyes are used for the functional resin body, the first step may be configured to apply the plurality of functional dyes to the base body at different timings.

For example, in the present embodiment, wavelength ranges having different wavelength ranges may refer to a configuration in having at least partially different wavelength ranges between the wavelength ranges. As an example, for example, the first wavelength range and the second wavelength range being different wavelength ranges may refer to a configuration having at least partially different wavelength ranges. In this case, for example, the first wavelength range and the second wavelength range may not overlap each other. Further, in this case, for example, the first wavelength range and the second wavelength range may overlap each other while being partially different. For example, in a case where a part of the first wavelength range and the second wavelength range overlap each other, by adding a function related to the first wavelength range to a functional resin body having a function related to the second wavelength range, reduction of transmittance in a wavelength range of the overlapping part may be further improved.

As an example, the third wavelength range, which is a wavelength range different from the first wavelength range and the second wavelength range, may refer to a configuration having a wavelength range at least partially different from the first wavelength range and the second wavelength range. In this case, for example, the third wavelength range may not overlap the first wavelength range and the second wavelength range. In this case, for example, the third wavelength range may overlap the first wavelength range and the second wavelength range while being partially different. For example, in a case where a part of the third wavelength range overlaps the first wavelength range and the second wavelength range, by adding a function related to the first wavelength range and the third wavelength range to a functional resin body having a function related to the second wavelength range, reduction of transmittance in a wavelength range of the overlapping part may be further improved.

### <Dyeing of Multifunctional Resin Body>

In the present embodiment, for example, in addition to the functional dye, a sublimable dye for adjusting color may be used to dye the multifunctional resin body to a desired color. For example, the first step may include obtaining the first function-adding base body to which a sublimable dye for dyeing the functional resin body is further applied. In this case, for example, the second step may include sublimating the sublimable dye applied to the first function-adding base body, and depositing the sublimable dye to on the functional resin body. In this case, for example, the third step may include heating the functional resin body on which the sublimable dye is deposited in the second step to fix the sublimable dye on the functional resin body. In the method for manufacturing a multifunctional resin body according to the present embodiment, due to the above steps, a function of reducing optical transmittance in a plurality of wavelength ranges is added to the functional resin body, and the functional resin body is dyed. Thereby, for example, it is possible to add a function to the functional resin body and to manufacture a multifunctional resin body having a desired color. As an example, even when a multifunctional resin body having a desired color cannot be manufactured due to influence of a functional dye at the time of adding a function to a functional resin body, it is possible to adjust the color with using the sublimable dye, and thus it is possible to obtain a multifunctional resin body having a desired color.

For example, the sublimable dye may include at least three dyes of red, blue, and yellow. For example, the functional dye may be used in addition to the at least three dyes of red, blue, and yellow. Of course, a color other than the three colors may be used as the sublimable dye. For example, a mixed color (green, purple, etc.) may be used.

For example, the first step may include a color information obtaining step and a setting step. For example, the color information obtaining step may include obtaining color information (color data) desired by an operator. For example, the setting step may be a setting step of setting an amount of the sublimable dye to be applied to the base body (the sublimable dye for dyeing the multifunctional resin body) based on the color information obtained in the color information obtaining step. The amount of the sublimable dye may be set according to an amount of the functional dye (for example, the first functional dye or the third functional dye). Accordingly, for example, the amount of the sublimable dye corresponding to the color information can be set, and thus the multifunctional resin body can be easily dyed to the desired color. In addition, for example, when the resin body is to be dyed to a desired color, the color of the resin body may change and may not become the desired color depending on the amount of the functional dye. However, if the amount of the sublimable dye is set corresponding to the amount of the functional dye, the multifunctional resin body can be dyed to the desired color. For example, even when the amount of the functional dye is changed, the resin body can be dyed to the desired color.

For example, the color information obtaining step may be performed by various apparatus. In this case, for example, in the color information obtaining step, a dye applying apparatus (for example, a dye applying apparatus 10) may be used. Further, in this case, for example, the color information obtaining step may be performed by an apparatus different from the dye applying apparatus. In this case, the dye applying apparatus may receive from the different apparatus an amount of each dye set by the different apparatus.

For example, the setting step may be performed by various apparatus. In this case, for example, in the setting step, a dye applying apparatus (for example, the dye applying apparatus 10) may be used. Further, in this case, for example, the setting step may be performed by an apparatus different from the dye applying apparatus. In this case, the dye applying apparatus may receive from the different apparatus an amount of each dye set by the different apparatus.

For example, the color information may be color tone information. For example, the color information may be information on at least one of hue, saturation, and brightness for indicating a color tone. For example, the color information may be density information indicating a shade of each color for indicating a color tone. For example, the color information may be density gradient information (gradation information). Of course, the color information is not limited to the above information. For example, the color information may be information for setting a color tone to be dyed to the multifunctional resin body.

### <Color Information Obtaining Step>

For example, in the color information obtaining step, the color information may be obtained by the operator inputting color information. In this case, for example, a selectable color may be presented in the dye applying apparatus (for example, the dye applying apparatus 10), and the color information may be input by selecting a color (color tone) desired by the operator. In this case, for example, the color information may be input by the operator inputting a parameter related to the color tone. Of course, the method for inputting the color information by the operator is not limited to the above, and the color information may be input by a method different from that described above. The color information may be input to an apparatus different from the dye applying apparatus, and the color information may be obtained by receiving the input color information with the dye applying apparatus.

For example, in the color information obtaining step, the color information may be obtained by the dye applying apparatus receiving color information. For example, in the color information obtaining step, the color information may be obtained by the dye applying apparatus receiving color information measured by a color information measuring unit that measures the color tone of the resin body dyed to the color desired by the operator. In this case, for example, the color information measuring unit may be provided in the dye applying apparatus, or may be provided as another apparatus.

### <Setting Step>

For example, in the setting step, the amount of each sublimable dye may be set using correspondence information, which is information in which the color information, the amount of the functional dye (for example, the first functional dye or the third functional dye), and the amount of the sublimable dye (the sublimable dye for staining the multifunctional resin body) are associated. In this case, for example, in the setting step, the amount of the functional dye and the amount of the sublimable dye may be set based on correspondence information stored in a storage unit (for example, a memory 20), which is information in which the color information, the amount of the functional dye, and the amount of the sublimable dye are associated. For example, the correspondence information may be set such that the color information, the amount of the functional dye, and the amount of the sublimable dye are associated in advance via a simulation, an experiment, or the like. Accordingly, the operator does not need to set the amount of each dye in detail, and it is possible to easily and smoothly obtain the first function-adding base body.

In this case, for example, in the setting step, the amount of the sublimable dye may be set from the correspondence information based only on the obtained color information. For example, by associating in advance the color information corresponding to the amount of the functional dye, the amount of the functional dye and the amount of the sublimable dye can be set based on the color information. In this case, for example, in the setting step, information on the amount of the functional dye may be obtained in addition to the obtained color information, and the amount of the sublimable dye may be set from the correspondence information based on the color information and information on the amount of the functional dye. For example, the information on the amount of the functional dye may be obtained by the operator inputting information on the amount of the functional dye. Also, for example, the information on the amount of functional dye may be obtained by receiving from another device.

For example, in the setting step, the amount of each dye may be set by calculation processing. In this case, for example, the amount of the functional dye and the amount of the sublimable dye may be calculated based on only the obtained color information. For example, by associating in advance the color information corresponding to the amount of the functional dye, the amount of the sublimable dye can be calculated and set based on the color information and the amount of the functional dye. Further, in this case, for example, in the setting step, the information on the amount of the functional dye may be obtained in addition to the obtained color information, and the amount of the sublimable dye may be calculated and set based on the color information and the information on the amount of the functional dye. For example, the information on the amount of the functional dye may be obtained by the operator inputting information on the amount of the functional dye to obtain the information on the amount of the functional dye. Also, for example, the information on the amount of functional dye may be obtained by receiving from another device.

In the setting step, the amount of each dye may be set by a method different from that described above. For example, optical transmittance information in a specific wavelength range desired by the operator may be obtained to set the amount of the functional dye.

### <Transmittance Information Obtaining Step>

For example, in the present embodiment, the first step may include a transmittance information obtaining step of obtaining optical transmittance information in a specific wavelength range desired by the operator. In this case, for example, the setting step may include setting the amount of the functional dye (for example, the first functional dye or the third functional dye) based on the optical transmittance information in the specific wavelength range obtained in the transmittance information obtaining step. For example, the transmittance information may be any information indicating the optical transmittance in the specific wavelength range (for example, the first wavelength range or the like).

For example, the transmittance information may be any information that directly or indirectly indicates the transmittance in the specific wavelength range. Thus, since the amount of the functional dye is set according to the transmittance, the operator can easily and smoothly set the amount of the functional dye. That is, the operator can easily and smoothly obtain the function-adding base body.

For example, the transmittance information obtaining step may be performed by various apparatus. In this case, for example, in the transmittance information obtaining step, a dye applying apparatus may be used. Further, in this case, for example, the transmittance information obtaining step may be performed by an apparatus different from the dye applying apparatus. In this case, the dye applying apparatus may receive from the different apparatus the transmittance information set by the different apparatus.

For example, in the transmittance information obtaining step, the transmittance information may be obtained by the operator inputting transmittance information. In this case, for example, selectable wavelength range and transmittance may be presented in the dye applying apparatus, and the transmittance information may be input by selecting a wavelength range desired by the operator and a transmittance desired by the operator. In this case, for example, the transmittance information may be input by the operator inputting a parameter related to the transmittance information. Of course, the method for inputting the transmittance information by the operator is not limited to the above, and the transmittance information may be input by a method different from that described above. The transmittance information may be input to an apparatus different from the dye applying apparatus, and the transmittance information may be obtained by receiving the input transmittance information with the dye applying apparatus.

For example, in the transmittance information obtaining step, the transmittance information may be obtained by the dye applying apparatus receiving transmittance information. For example, in the transmittance information obtaining step, the transmittance information may be obtained by receiving the wavelength range of the resin body having the function of reducing the optical transmittance in the wavelength range desired by the operator and the transmittance information measured by a transmittance measuring unit that measures the transmittance thereof. In this case, for example, the transmittance measuring unit may be provided in the dye applying apparatus, or may be provided as another apparatus.

### <Acquisition of Functional Resin Body>

For example, the functional resin body having the function of reducing the optical transmittance in the second wavelength range, which is a wavelength range different from the first wavelength range, can be obtained by various manufacturing methods, wherein only the method disclosed in claim 1 falls under the scope of the invention. That is, the functional resin body having the function of reducing the optical transmittance in the specific wavelength range can be obtained by various manufacturing methods. For example and not falling under the scope of the claimed invention, the functional resin body may be obtained by using at least one of a method of kneading a matter capable of selectively absorbing a wavelength into a resin body, a method of immersing the resin body in a liquid obtained by mixing a matter capable of selectively absorbing a wavelength for a predetermined time (immersion method), a method of forming a multilayer film with respect to a resin body, and the like.

The functional resin body is obtained by using a vapor phase transfer dyeing method. In this case, a fourth step, a fifth step, and a sixth step are performed. The fourth step is a step of applying a second functional dye, which absorbs light in the second wavelength range, to a base body (for example, a base body 102) to obtain a second function-adding base body (for example, a second function-adding base body 101). The fifth step is a step of setting the second function-adding base body obtained in the fourth step to face a resin body, of heating the second function-adding base body to sublimate the second functional dye applied to the second function-adding base body, and of depositing the second functional dye on the resin body. The sixth step is a step of heating the resin body on which the second functional dye is deposited in the fifth step to fix the second functional dye on the resin bodya. In the method for manufacturing a multifunctional resin body including the fourth step, the fifth step, and the sixth step, the functional resin body is obtained by adding a function of reducing the optical transmittance in the second wavelength range to the resin body with using the second functional dye. As described above, for example, when obtaining the functional resin body, the same step as that when obtaining the multifunctional resin body is performed, and thus the multifunctional resin body can be obtained more easily. Further, for example, since the functional dye can be uniformly applied in both steps when obtaining the functional resin body and the multifunctional resin body, the variation in the optical transmittance in the multifunctional resin body can be further prevented.

For example, as the resin body, a lens (for example, a lens 108) which is one of resin bodies may be used. Of course, the technology exemplified below can also be applied to a resin body other than the lens (for example, a molded article such as goggles, a cover of a mobile phone, a cover for light, an accessory, a toy, a film (having a thickness of, for example, 400 µm or less), and a plate material (having a thickness of, for example, 400 µm or more)).

The functional dye (for example, the first functional dye, the second functional dye, the third functional dye, or the like) in the present embodiment is a functional dye that absorbs light in at least one specific wavelength range. For example, in a case of a functional dye that absorbs light in a plurality of specific wavelength ranges, a configuration in which a plurality of specific wavelength ranges are separate from each other (for example, a configuration in which a plurality of peaks of wavelength exist and the peaks of wavelength are separate from each other) may be used. For example, in a case of a functional dye that absorbs light in a plurality of specific wavelength ranges, at least some of the wavelength ranges among the plurality of specific wavelength ranges may overlap each other.

In the fourth step, the color information obtaining step, the setting step, and the transmittance information obtaining step may be performed.

Hereinafter, a method for manufacturing a multifunctional resin body will be described in detail. The following describes, as an example, a case of adding a function to the functional lens 8, which is one of functional resin bodies, by using the vapor phase transfer dyeing method so as to manufacture a multifunctional resin body.

### <First Step>

For example, the first step performed by the dye applying apparatus 10 includes applying a functional dye (for example, the first functional dye) to the base body 2 to obtain (manufacture) the function-adding base body 1. For example, in the first step, the dye applying apparatus 10 applies functional dye, which is to be deposited on the functional lens 8 later, to the base body 2, so as to form a dye portion 6. For example, the base body 2 is a medium for temporarily holding the functional dye used when adding a function to the function lens 8. The base body 2 will be described in detail later.

In the present embodiment, for example, a printing apparatus is used as the dye applying apparatus 10. For example, in the present embodiment, in the first step, the function-adding base body 1 is obtained by printing a function-adding ink containing the functional dye onto the base body 2 using the printing apparatus. As described above, an application amount of the functional dye can be easily controlled with high accuracy, and the functional dye can be easily and uniformly applied to the base body. In addition, the use of the printing apparatus reduces the used functional dye. In the present embodiment, by performing a step of drying the ink printed by the printing apparatus, the functional dye can be held more firmly.

In the present embodiment, a case in which a sublimable dye for adjusting the color of the multifunctional resin body is used in addition to the functional dye will be described as an example. Of course, the functional dyes may be used alone. For example, in the present embodiment, the sublimable dye includes at least three dyes of red, blue, and yellow. For example, by allowing the functional dye to be discharged in addition to the at least three dyes of red, blue, and yellow, the multifunctional resin body can be favorably dyed to various colors. That is, it is possible to easily obtain the function-adding base body 1 capable of favorably dyeing the multifunctional resin body to various colors. Of course, colors other than these three colors may be used. For example, a mixed color (green, purple, etc.) may be used.

In the present embodiment, for example, the functional dye may be dissolved in a solvent of the ink. For example, the function-adding ink is poured in an ink container (for example, an ink pack, an ink cartridge, or the like) for inkjet printer, and the ink container is placed on a mounting unit 14 of the inkjet printer 11. In the present embodiment, a case where an ink cartridge 13 is used as the ink container will be described as an example. For example, the function-adding ink is poured in the ink cartridge 13 for inkjet printer, and the cartridge 13 is amounted to the mounting unit 14 of the inkjet printer 11. In the present embodiment, for example, a functional dye (for example, the first functional dye) that reduces optical transmittance in a specific wavelength range (for example, the first wavelength range) is used as the functional dye. Details of the functional dye will be described later.

In the present embodiment, for example, a sublimable dye is used together with the functional dye. For example, similarly to the function-adding ink, the sublimable dye may be dissolved in the solvent of the ink. In the present embodiment, for example, the dyeing ink includes at least three dyeing inks of red, blue, and yellow. For example, the dyeing inks are poured in an ink container (for example, an ink pack, an ink cartridge, or the like) for inkjet printer, and the ink container is mounted on the mounting unit 14 of the inkjet printer 11. In the present embodiment, a case where an ink cartridge 13 is used as the ink container will be described as an example. For example, the dyeing inks are poured in the ink cartridge 13 for inkjet printer, and the cartridge 13 is amounted to the mounting unit 14 of the inkjet printer 11. For example, a commercially available inkjet printer 11 can be used. As the sublimable dye, for example, a dye having heat resistance that can withstand heat during sublimation is preferably used. As an example, in the present embodiment, a quinophthalone-based sublimable dye or an anthraquinone-based sublimable dye is used (for an example of the dye, see JP-A-2004-326018 and JP-A-2003-185982).

For example, in the present embodiment, a configuration in which the function-adding ink and the dyeing inks are poured in separate ink containers (in the present embodiment, the ink cartridge 13) is described as an example, without being limited thereto. For example, a mixed ink obtained by mixing the function-adding ink and the dyeing ink may be used. In this case, for example, the mixed ink may be poured in the ink container.

In the present embodiment, for example, a case in which the inject printer 11 is used as the printing apparatus will be described as an example. In this case, for example, the functional dye is applied to the base body 2 by printing with the inkjet printer 11. In the present embodiment, for example, the injector printer 11 includes the mounting unit 14, an inkjet head 15, and a control unit 16. Of course, the injector printer 11 is not limited to the above configuration.

For example, the mounting unit 14 mounts the ink container of the function-adding ink containing the functional dye (for example, the ink cartridge 13 described later) and the ink container of the dyeing inks containing the sublimable dye (for example, the ink cartridge 13 described later). For example, the inkjet head 15 discharges the function-adding ink and the dyeing inks toward the base body 2 from the ink container of the function-adding ink added to the mounting unit 14 and the ink container of the dyeing inks. As a result, the function-adding ink and the dyeing inks are printed on the base body 2. For example, the control unit 16 controls driving of the inkjet head 15 to independently inject the function-adding ink and the dyeing inks from the inkjet head 15.

For example, in a case where the dyeing inks are discharged together with the function-adding ink, the control unit 16 may discharge the function-adding ink and the dyeing inks from the inkjet head 15 simultaneously, and apply the functional dye and the sublimable dye to the base body 2 in a mixed state. In the present embodiment, "simultaneously" may refer to any configuration in which the functional dye and the sublimable dye can be applied to the base body 2 in a mixed state, and is inclusive of substantially simultaneous.

For example, in a case where the dyeing inks are discharged together with the function-adding ink, the control unit 16 may discharge the function-adding ink and the dyeing inks from the inkjet head 15 at different timings, and apply the functional dye and the sublimable dye to the base body 2. For example, after one of the function-adding ink and the dyeing ink is discharged first, the other one may be discharged thereafter.

For example, in order to use the inkjet printer 11 to print on the base body 2 the function-adding ink containing the functional dye for adding the desired function (for example, the function of reducing the optical transmittance in the specific wavelength range) and the dyeing inks containing the sublimable dye for dyeing to the desired color, a personal computer 12 (hereinafter, referred to as "PC") is used to adjust a discharge amount of each ink to be printed.

In the present embodiment, the amount of the function-adding ink containing the functional dye and the amounts of the dyeing inks containing the sublimable dye for adjusting color are stored in the memory 20 as color data. Further, as the color data, the color density is stored in the memory 20. For example, by selecting color data desired by the operator, it is possible to call the color data from the memory 20, and to add the same function and reproduce the same color for any number of times. In addition, for example, since shading of the color is digitally managed, it is possible to obtain a color of the same density for any number of times when necessary. For example, the density gradient can be obtained by a gradation function provided in drawing software or the like. For example, gradation corresponding to preference may be set in advance, and stored as unique gradation data (color data) in the PC 12. In the present embodiment, for example, a gradation pattern having a density gradient will be described as an example of a desired color, without being not limited thereto. For example, the desired color may be printed with a variety of designs (e.g., monochromatic designs, images, etc.).

For example, the color data may be stored in the memory 20 for each function to be added. In this case, the function to be added may be selected, and the color data when the function is added may be selected. That is, the amount of the function-adding ink containing the functional dye and the color data may be set independently. In a case where the function to be added can be selected, the function-adding ink containing the functional dye corresponding to the function to be added is selected in accordance with the selected function, and is discharged from the inkjet printer 11 and printed on the base body 2.

The concentration of the functional dye may also be changeable. For example, the optical transmittance can be changed by changing the concentration of the functional dye. In this case, for example, the concentration of the functional dye may be selectable, and the color data at the time of applying the functional dye at the selected concentration may be selected for each concentration of the functional dye.

For example, a paper, a metal plate (for example, aluminum, iron, copper, or the like), glass, or the like may be used as the base body 2 on which the functional dye is printed by the printing apparatus. In the following description, the base body 2 will be described using paper as an example. In the present embodiment, for example, a sheet-like base body is used as the base body 2. In the following description, the printing apparatus will be described with using the inject printer 11 as an example. For example, the base body 2 is placed in the injector printer 11, and printing is performed through operation of the PC 12 so as to obtain a preset function addition, color, and color density.

In the present embodiment, the configuration in which the inkjet printer 11 is used as the printing apparatus in the dye applying apparatus 10 has been described as an example, whereas the present invention is not limited thereto. The printing apparatus may be configured to apply the functional dye to the base body 2 by performing printing using a laser printer. In this case, for example, the functional dye is applied to the base body 2 by a laser printer using a toner.

In the present embodiment, the configuration in which the functional dye is applied to the base body 2 using the printing apparatus as a dye coating unit 10 has been described as an example, whereas the present invention is not limited thereto. For example, the dye applying apparatus 10 may be configured such that the functional dye can be applied to the base body 2. For example, the dye applying apparatus 10 may apply the function-adding ink to the function-adding base body 1 by driving a dispenser (liquid quantitative coating apparatus), a roller, or the like. In addition, for example, the function-adding ink may be applied to the function-adding base body 1 with using, for example, a brush, a roller, or a spray by an operator without using the dye applying apparatus 10. The functional dye may be applied to the base body 2 without being made into ink.

When the functional dye is applied to the base body 2, the functional dye may be applied at least once. For example, the functional dye may be applied to the base body 2 by applying one time (for example, by printing or the like one time), or the functional dye may be applied to the base body 2 by applying a plurality of times (for example, printing a plurality of times). That is, the number of times when the functional dye is applied to the base body 2 may be changed depending on the color or the density.

### <Function-Adding Ink>

For example, in the present embodiment, as the functional dye (for example, the first functional dye), a functional dye that absorbs light in a wavelength range of a near-infrared region is used. As an example, in the present embodiment, as the functional dye, a functional dye that absorbs light in a wavelength range of 750 nm to 790 nm is used. Of course, for example, as the functional dye that reduces the optical transmittance in the wavelength range of the near-infrared region, the wavelength range is not limited to the wavelength range of 750 nm to 790 nm, and can be set to any wavelength range. For example, a functional dye that absorbs light of a specific range (for example, 800 nm to 950 nm) in a wavelength range of 750 nm to 2000 nm, which is generally the wavelength range of the near-infrared region, may be used. That is, with using a functional dye for the specific wavelength range desired by the operator, the function of reducing the optical transmittance with respect to the desired specific wavelength range can be added to the functional resin body.

For example, as the functional dye that absorbs light in the wavelength range of the infrared region, at least one of a cyanine dye, a phthalocyanine dye, a quinone dye, a diimmonium dye, a naphthalocyanine dye, a squarylium dye, a metal-containing azo dye, and the like may be used. Of course, the functional dye that absorbs light in the wavelength range of the infrared region is not limited to the above dyes, and may be any functional dye that has sublimability and absorbs light in the wavelength range of the infrared region.

In the present embodiment, a functional dye that absorbs light in the wavelength range of the near-infrared region is used as an example of the functional dye, but the present invention is not limited thereto. For example, as the functional dye, a functional dye that absorbs light in a wavelength range different from that of the functional dye that absorbs light in the wavelength range of the near-infrared region may be used.

In this case, for example, the functional dye may be a functional dye that absorbs light in a wavelength range of a blue region (for example, generally 380 nm to 500 nm). For example, the functional dye may be a functional dye that absorbs light in a wavelength range of a specific range in the wavelength range of the blue region. As an example, a functional dye that absorbs light in a specific range (for example, 430 nm to 490 nm) in a wavelength range of 380 nm to 500 nm, which is generally regarded as the blue wavelength range, may be used. For example, as the functional dye that absorbs light in the wavelength range of the blue region, a dye that is at least one of a merocyanine-based compound, a benzophenone-based compound, a triazine-based compound, an alkoxyanthracene compound, a copper porphyrin complex, or a compound having a dimethine skeleton, a pyrazolone skeleton, a naphthalimide skeleton, or a psorene skeleton may be used. Of course, the functional dye that absorbs light in the wavelength range of the blue region is not limited to the above dyes, and may be any functional dye that has sublimability and absorbs light in the wavelength range of the blue region.

In this case, for example, the functional dye may be a functional dye that absorbs light in a wavelength range of an ultraviolet region (for example, generally 320 nm to 400 nm). For example, the functional dye may be a functional dye that absorbs light in a wavelength range of a specific range in the wavelength range of the ultraviolet region. As an example, a functional dye that absorbs light of a specific range (for example, 380 nm to 400 nm) in a wavelength range of 320 nm to 400 nm, which is generally regarded as the wavelength range of the ultraviolet region, may be used. For example, at least one of benzophenone-based, salicylate-based, benzotriazole-based, cyanoacrylate-based, anilide-oxalate-based, and triazine-based dyes may be used as the functional dye that absorbs light in the wavelength range of the ultraviolet region. Of course, the functional dye that absorbs light in the wavelength range of the ultraviolet region is not limited to the above dyes, and may be any functional dye that has sublimability and absorbs light in the wavelength range of the ultraviolet region.

Of course, the functional dye is not limited to the above-described functional dyes that absorbs light in the above wavelength range, and a functional dye that absorbs light in any arbitrary wavelength range desired by the operator can be used. For example, as the functional dye, a function of reducing optical transmittance in a plurality of specific wavelength ranges (for example, the first wavelength range and the third wavelength range) may be added to the functional resin body. As an example, as the functional dye, a functional dye capable of adding a function of reducing the optical transmittance in the wavelength ranges in both the blue region and the ultraviolet region to the functional resin body may be used. For example, in a case where a function of reducing optical transmittance in a plurality of specific wavelength ranges is to be added to the functional resin body, at least one or more functional dyes may be used. For example, in a case where a function of reducing optical transmittance in a plurality of specific wavelength ranges is to be added to the functional resin body, one functional dye may have a function in a plurality of specific wavelength ranges. For example, in a case where a function of reducing optical transmittance in a plurality of specific wavelength ranges is to be added to the functional resin body, a plurality of functional dyes (for example, the first functional dye and the third functional dye) may be used. In a case where a plurality of functional dyes are used, the plurality of functional dyes may be used in a mixed state.

As described above, the function-adding base body 1 to which the functional dye is applied by the inkjet printer 11 is obtained.

### <Second Step>

As described above, the second step is performed using the function-adding base body 1 obtained in the first step. The second step is a step of setting the function-adding base body 1 obtained in the first step to face the functional resin body (in the present embodiment, the functional lens 8), of heating the function-adding base body 1 to sublimate the functional dye applied to the function-adding base body 1, and of depositing the functional dye on the lens 8. For example, in the second step, the deposition apparatus 30 is used.

For example, the deposition apparatus 30 heats the functional dye and the sublimable dye applied to the function-adding base body 1 with an electromagnetic wave, so as to sublimate the functional dye and the sublimable dye toward the functional lens 8. As a result, the functional dye and the sublimable dye are deposited on the functional lens 8. The functional lens 8 may be formed with various layers such as a receiving film for facilitating fixing of the functional dye and the sublimable dye in the third step described later. The deposition apparatus 30 according to the present embodiment includes an electromagnetic wave generating part 31, a depositing jig 32, a pump 36, and a valve 37. Of course, the configuration of the deposition apparatus 30 is not limited to the above configuration. In the present embodiment, a case where the functional dye and the sublimable dye are deposited on the functional lens 8 will be described as an example, whereas the functional dye may be deposited on the functional lens 8 alone.

For example, the electromagnetic wave generating part 31 generates electromagnetic waves. In the present embodiment, as one example, a halogen lamp that generates infrared light is used as the electromagnetic wave generating part 31. However, the electromagnetic wave generating part 31 may be any one that generates an electromagnetic wave. Therefore, instead of the halogen lamp, a configuration in which electromagnetic waves of other wavelengths such as ultraviolet rays and microwaves are generated may be used. For example, the deposition apparatus 30 irradiates the function-adding base body 1 with electromagnetic waves, thereby increasing the temperature of the sublimable dye in short time. To sublimate the functional dye and the sublimable dye on the function-adding base body 1, it is also conceivable to heat the functional dye and the sublimable dye by bringing an iron plate or the like heated to a high temperature into contact with the function-adding base body 1. However, it is difficult to bring the function-adding base body 1 and the iron plate or the like into uniform contact (for example, without gaps) with each other. Unless the contact state is uniform, the functional dye and the sublimable dye are not uniformly heated, resulting in variation in transmittance, color unevenness and so on. On the other hand, the deposition apparatus 30 according to the present embodiment enables uniform heating of the functional dye and the sublimable dye with the electromagnetic waves from the electromagnetic wave generating part 31 placed at a distance from the function-adding base body 1.

For example, the deposition jig 32 holds the function-adding base body 1 and the functional lens 8. The depositing jig 32 according to the present embodiment is provided with a lens supporting part 33 and a base body supporting part 34. The lens supporting part 33 includes a cylindrical base portion and a mounting table placed inside the base portion. The functional lens 8 is supported by the mounting table of the lens supporting portion 33 in a state surrounded by the base portion. The base body supporting part 34 is positioned at the upper end of the cylindrical base portion, and supports the function-adding base body 1 above the functional lens 8. Although not shown in detail, when the outer peripheral edge portion of the function-adding base body 1 is placed on the base body supporting part 34, an annular base pressing member is placed on the outer peripheral edge portion of the function-adding base body 1. As a result, the position of the function-adding base body 1 is fixed. In the related art, in order to prevent contamination of the deposition apparatus 30, a plate-like glass may be further placed on an upper surface of the function-adding base body 1 held by the base body supporting part 34 so as to prevent the sublimated functional dye and sublimable dye from escaping and spreading on a back side of the function-adding base body 1.

For example, the function-adding base body 1 is placed so that a surface having the functional dye and the sublimable dye applied thereto faces the functional lens 8. In the present embodiment, since the function-adding base body 1 is supported above the functional lens 8, the function-adding base body 1 is disposed in the base body supporting part 34 so that the surface having the dyes applied thereto faces down.

For example, when the function-adding base body 1 is faced to the functional lens 8, the function-adding base body may face the functional lens in a non-contact manner (for example, 2 mm to 30 mm). In this case, for example, the second step may include setting the function-adding base body 1 obtained in the first step to face the functional lens 8 in a non-contact manner, heating the function-adding base body 1 to sublimate the functional dye and the sublimable dye applied to the function-adding base body 1, and of depositing the functional dye and the sublimable dye on the functional lens 8. For example, by facing each other in the non-contact manner, it is possible to prevent the heat, generated when the function-adding base body 1 is heated to sublimate the functional dye and the sublimable dye, from being conducted to the functional resin body. Thereby, for example, by facing each other in the non-contact manner, it is possible to prevent the heat, generated when the function-adding base body 1 is heated, from being conducted to the functional resin body. As a result, it is possible to prevent discoloration, shrinkage, and the like of the functional resin body by heat.

For example, since a distance is generated between the function-adding base body and the functional resin body by facing each other in the non-contact manner, the functional dye can be sufficiently dispersed and deposited on the functional resin body. In addition, for example, the sublimable dye can be sufficiently dispersed and deposited on the functional resin body. As a result, variation in transmittance and color unevenness on the lens can be further prevented, and an excellent multifunctional resin body can be manufactured. In particular, in a case where a gradation pattern is applied to the base body 2 in the color of the multifunctional resin body, the gradation pattern can be suitably reproduced on the multifunctional resin body.

For example, the pump 36 serves to exhaust air in the deposition apparatus 30 to the outside, thereby decreasing air pressure of the inside of the deposition apparatus 30. That is, for example, the pump 36 serves to exhaust air in the deposition apparatus 30 to the outside, thereby setting the deposition apparatus 30 to a predetermined degree of vacuum.

For example, in the second step, when the lens 8 is placed inside the deposition apparatus 30 so that the functional dye and the sublimable dye are deposited on the lens 8, the inside of the deposition apparatus 30 is set to the predetermined degree of vacuum by the pump 36 so as to perform the deposition operation. In the present embodiment, for example, the inside of the deposition apparatus 30 is set to a predetermined degree of vacuum, but is not limited thereto, and the deposition operation may be performed with the inside of the deposition apparatus 30 under normal pressure.

For example, after the vacuum state, the function-adding base body 1 is heated from above using the electromagnetic wave generating part 31 to sublimate the functional dye and the sublimable dye. For example, when the heating temperature is lower than 100°C on the function-adding base body 1, the functional dye and the sublimable dye are unlikely to be sublimated from the function-adding base body 1, and, for example, when the temperature exceeds 250°C, deterioration of the functional dye and the sublimable dye due to high temperature or deformation of the lens 8 is likely to occur. Therefore, the heating temperature may be between 100°C and 250°C, but the temperature may be selected as high as possible in accordance with the material of the lens 8.

### <Functional Resin Body>

The functional resin body (for example, the function lens 8) has a function of reducing optical transmittance in a specific wavelength range, the second wavelength range. For example, in the present embodiment, the function lens 8 has a function of reducing the optical transmittance in the wavelength range of the ultraviolet region. For example, in the present embodiment, the function lens 8 reduces the optical transmittance in a wavelength range of a specific range in the wavelength range of the ultraviolet region. As an example, in the present embodiment, for example, the function lens 8 has a function of reducing optical transmittance in a wavelength range of 380 nm to 400 nm.

Of course, for example, as the function lens 8 that reduces the optical transmittance in the wavelength range of the ultraviolet region, the wavelength range is not limited to the wavelength range of 380 nm to 400 nm, and can be set to any wavelength range. For example, the functional lens 8 may generally reduce the optical transmittance in 320 nm to 400 nm. For example, the function lens 8 may reduce the optical transmittance in a wavelength range of a specific range in the wavelength range of the ultraviolet region. As an example, a function lens 8 that reduces optical transmittance in a specific range (for example, 380 nm to 400 nm) in a wavelength range of 320 nm to 400 nm, which is generally regarded as the wavelength range of the ultraviolet region, may be used.

For example, the functional lens 8 can be obtained (manufactured) by various manufacturing methods. For example and not according to the claimed invention, the functional lens 8 may be obtained by using at least one of a method of kneading a matter capable of selectively absorbing a wavelength (for example, a dye) into a lens, a method of immersing the lens in a liquid obtained by mixing a matter capable of selectively absorbing a wavelength for a predetermined time (immersion method), a method of forming a multilayer film with respect to a lens, the vapor phase transfer dyeing method, and the like. Of course, the function lens 8 may be obtained by a method different from those described above.

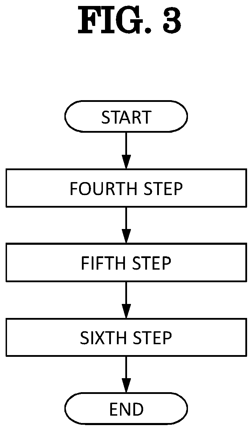

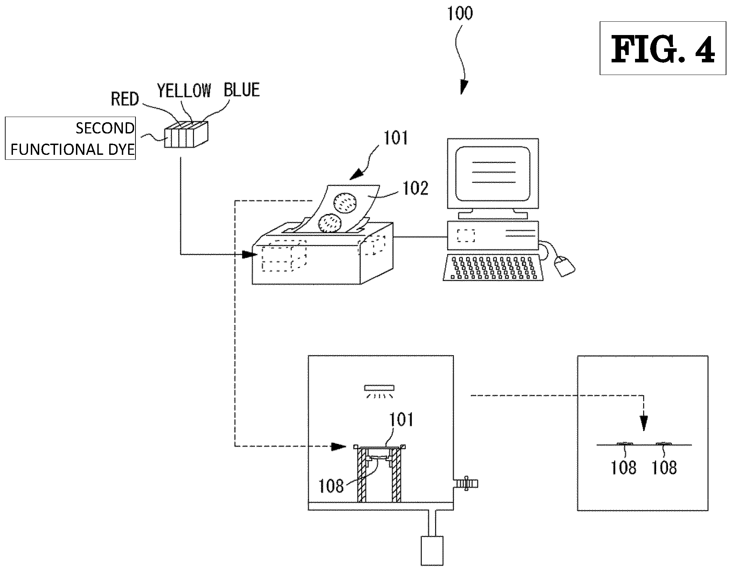

The functional lens 8 is obtained by using the vapor phase transfer dyeing method. A method for manufacturing the functional lens 8 using the vapor phase transfer dyeing method will be described below. Fig. 3 is a flowchart showing a flow of a method for manufacturing the functional resin body of the present embodiment. For example, Fig. 4 is a schematic view showing a manufacturing system used in the method for manufacturing the functional resin body of the present embodiment.

In the vapor phase transfer dyeing method, the fourth step, the fifth step, and the sixth step are performed. As the fourth step, the fifth step, and the sixth step in the present embodiment, the manufacturing system used in the method for manufacturing the multifunctional resin body for performing the first step, the second step, and the third step may be used. Of course, the manufacturing system used in the fourth step, the fifth step, the sixth step, and the manufacturing system used in the first step, the second step, and the third step may be different manufacturing systems. Further, for example, at least a part of the manufacturing system used in the fourth step, the fifth step, the sixth step, and the manufacturing system used in the first step, the second step, and the third step may be used in common. In the present embodiment, a case in which the fourth step, the fifth step, and the sixth step are performed using the manufacturing system used in the method for manufacturing the multifunctional resin body that performs the first step, the second step, and the third step will be described as an example.

The fourth step is a step of applying a functional dye, the second functional dye, which absorbs light in the second wavelength range, to the base body 102 to obtain the second function-adding base body 101. The fifth step is a step of setting the second function-adding base body 101 obtained in the fourth step to face the lens 108, of heating the second function-adding base body 101 to sublimate the second functional dye applied to the second function-adding base body 101, and of depositing the second functional dye on the lens 108. The sixth step is a step of heating the lens 108 on which the second functional dye is deposited in the fifth step to fix the second functional dye on the lens 108. By performing the fourth step, the fifth step, and the sixth step, the functional lens 8 is obtained by adding a function of reducing the optical transmittance in the second wavelength range to the lens 108 with using the second functional dye.

For example, in the present embodiment, in a case where the functional lens 8 having the function of reducing the optical transmittance in the wavelength range of the ultraviolet region is to be obtained, a functional dye that absorbs light in the wavelength range of the ultraviolet region is used as the second functional dye. For example, at least one of benzophenone-based, salicylate-based, benzotriazole-based, cyanoacrylate-based, anilide-oxalate-based, and triazine-based dyes may be used as the second functional dye that absorbs light in the wavelength range of the ultraviolet region. Of course, the second functional dye that absorbs light in the wavelength range of the ultraviolet region is not limited to the above dyes, and may be any functional dye that has sublimability and absorbs light in the wavelength range of the ultraviolet region.

In the present embodiment, a configuration having a function of reducing the optical transmittance in the wavelength range of the ultraviolet region is described as an example of the function lens 8, but the present invention is not limited thereto. For example, as the function lens 8, a configuration having a function of reducing optical transmittance in a wavelength range different from the function of reducing the optical transmittance in the wavelength range of the ultraviolet region may be used.

In this case, for example, the function lens 8 may have a function of reducing the optical transmittance in the wavelength range of the blue region (for example, generally 380 nm to 500 nm). For example, the function lens 8 may have a function of reducing the optical transmittance in a wavelength range of a specific range in the wavelength range of the blue region. As an example, as the function lens 8, for example, a configuration having a function of reducing optical transmittance in a specific range (for example, 430 nm to 490 nm) in the wavelength range of 380 nm to 500 nm, which is generally regarded as the blue wavelength range, may be used. For example, as the second functional dye for obtaining the functional lens 8 having the function of reducing the optical transmittance in the wavelength range of the blue region, a dye that is at least one of a merocyanine-based compound, a benzophenone-based compound, a triazine-based compound, an alkoxyanthracene compound, a copper porphyrin complex, or a compound having a dimethine skeleton, a pyrazolone skeleton, a naphthalimide skeleton, or a psorene skeleton may be used. Of course, the second functional dye that absorbs light in the wavelength range of the blue region is not limited to the above dyes, and may be any functional dye that has sublimability and absorbs light in the wavelength range of the blue region.

For example, the function lens 8 may have a function of reducing the optical transmittance in the wavelength range of the near-infrared region (for example, generally 750 nm to 2000 nm). For example, the function lens 8 may have a function of reducing the optical transmittance in a wavelength range of a specific range in the wavelength range of the near-infrared region. As an example, the function lens 8 may have a function of reducing the optical transmittance in a specific range (for example, 800 nm to 950 nm) in the wavelength range of 750 nm to 2000 nm, which is generally regarded as the wavelength range of the near-infrared region. For example, as the second functional dye when obtaining the functional lens 8 having the function of reducing the optical transmittance in the wavelength range of the near-infrared region, at least one of a cyanine dye, a phthalocyanine dye, a quinone dye, a diimmonium dye, a naphthalocyanine dye, a squarylium dye, a metal-containing azo dye, and the like may be used. Of course, the second functional dye that absorbs light in the wavelength range of the infrared region is not limited to the above dyes, and may be any functional dye that has sublimability and absorbs light in the wavelength range of the infrared region.

Of course, the function lens 8 is not limited to a configuration having a function of reducing the optical transmittance in the above wavelength range, and a functional lens 8 having a function of reducing light in any wavelength range desired by the operator can be used. For example, the function lens 8 having a function of reducing the optical transmittance in a plurality of specific wavelength ranges may be used as the function lens 8. For example, as the function lens 8, a functional lens 8 having a function of reducing the optical transmittance in both the wavelength ranges of the blue region and the ultraviolet region may be used as the functional lens 8.

For example, in a case where a function of reducing optical transmittance in a plurality of specific wavelength ranges is to be added to the lens 108, at least one or more functional dyes may be used. For example, in a case where a function of reducing optical transmittance in a plurality of specific wavelength ranges is to be added to the lens 108, one functional dye may have a function in a plurality of specific wavelength ranges. For example, in a case where a function of reducing the optical transmittance in a plurality of specific wavelength ranges is to be added to the lens 108, a plurality of functional dyes having a function of reducing optical transmittance in a specific wavelength range may be used. In a case where a plurality of functional dyes are used, the plurality of functional dyes may be used in a mixed state.

### <Third Step>

When the second step is completed, the third step is performed. The third step will be described below. The third step includes heating the functional lens 8 on which the functional dye and the sublimable dye are deposited in the second step to fix the functional dye and the sublimable dye. Of course, the third step may be a step of fixing only the functional dye.

For example, the dye fixing apparatus 50 heats the functional lens 8 having the functional dye and the sublimable dye deposited thereto, thereby fixing the functional dye and the sublimable dye to the functional lens 8. For example, by heating the functional lens 8, the functional dye and the sublimable dye are fixed to the functional lens 8. Accordingly, it is possible to add the function of reducing the optical transmittance in the specific wavelength range to the function lens 8, and to dye the functional lens 8 to the desired color.

For example, in the present embodiment, an oven is used as the dye fixing apparatus 50. With using an oven (particularly, a blower type constant temperature incubator), a temperature of the functional lens 8 gradually increases over a long period of time, so that a temperature difference is unlikely to occur. Therefore, the functional dye and the sublimable dye are easily fixed to the functional lens 8 uniformly.

For example, when the third step is performed, the functional dye and the sublimable dye may be fixed by heating under normal pressure. Of course, the third step may be performed under a different air pressure. For example, the operator causes the functional dye and the sublimable dye to deposit on the functional lens 8 in the deposition apparatus 30, and then takes out the functional lens 8 on which the functional dye and the sublimable dye are deposited. For example, the operator places the functional lens 8 in the dye fixing apparatus 50 and heats the functional lens 8 under normal pressure so as to fix the functional dye and the sublimable dye.

For example, in the present embodiment, the heating temperature is a temperature at which sufficient color development is possible without deforming the functional lens 8. For example, the heating temperature may be 110°C or more and 160°C or less (110°C to 160°C). In this case, for example, the third step may be a step of heating at 110°C to 160°C the functional resin body on which the functional dye and the sublimable dye are deposited in the second step to fix the functional dye and the sublimable dye. For example, by fixing the functional dye and the sublimable dye at 110°C or higher in the third step, the functional dye and the sublimable dye can easily reach the inside of the functional resin body (in the present embodiment, the functional lens 8), the function of reducing the optical transmittance in the specific wavelength range can be satisfactorily added, and dyeing can be performed more favorably. In addition, for example, after the third step, it is possible to prevent missing color from the dyed multifunctional resin body (in the present embodiment, the multifunctional lens). In addition, for example, by fixing the functional dye and the sublimable dye at a temperature of 160°C or lower in the third step, it is possible to prevent the functional resin body from being excessively heated, and it is possible to make the functional resin body more unlikely to be deformed. The heating temperature is more preferably 120°C or higher and 150°C or lower. In this case, for example, the third step may be a step of heating at 120°C to 150°C the functional resin body on which the functional dye and the sublimable dye are deposited in the second step to fix the functional dye and the sublimable dye. For example, by fixing the functional dye and the sublimable dye at 120°C to 150°C in the third step, the function of reducing the optical transmittance in the specific wavelength range can be satisfactorily added, and dyeing can be performed more favorably. In addition, for example, after the third step, missing color from the dyed multifunctional resin body can be further prevented, and deformation of the multifunctional resin body can be further prevented.

As described above, the method for manufacturing a multifunctional resin body not according to the present disclosure includes: a first step of applying a first functional dye, which absorbs light in a first wavelength range, to a base body to obtain a first function-adding base body; a second step of setting the first function-adding base body to face a functional resin body having a function of reducing optical transmittance in a second wavelength range, and sublimating the first functional dye applied to the first function-adding base body to deposit the first functional dye on the functional resin body; and a third step of heating the functional resin body on which the first functional dye is deposited to fix the first functional dye on the functional resin body. A multifunctional resin body that reduces optical transmittance in a plurality of wavelength ranges is obtained by adding a function of reducing the optical transmittance in the first wavelength range to the functional resin body with using the first functional dye. Thus, for example, a multifunctional resin body that reduces optical transmittance in a plurality of wavelength ranges can be easily manufactured without requiring many steps or complicated operations. In addition, for example, an excellent multifunctional resin body in which cracks are prevented can be manufactured.

In addition, for example, it is possible to prevent variation in optical transmittance in the multifunctional resin body. Further, for example, since a combination of the plurality of wavelength ranges can be changed, it is possible to easily manufacture a variety of multifunctional resin bodies capable of reducing optical transmittance in a plurality of wavelength ranges. That is, for example, since a functional resin body that reduces optical transmittance in a specific wavelength range can be added with a function of reducing optical transmittance in another wavelength range, it is possible to easily manufacture a variety of multifunctional resin bodies capable of reducing the optical transmittance in a plurality of wavelength ranges.

In the present embodiment, the shape (print shape) of the dye portion 6 is circular, but the shape is not limited thereto, and may be, for example, a semicircular shape or another shape (for example, a square shape).

In the present embodiment, the heating method of the function-adding base body 1 is described as an example, but is not limited thereto. For example, the heating method of the function-adding base body 1 can sublimate the sublimable dye in the same manner by heating from a side surface or from below as well.

It is also possible to change the configuration of the dye fixing apparatus 50. For example, the dye fixing apparatus 50 may heat the functional lens 8 by scanning the functional lens 8 with laser. In this case, the dye fixing apparatus 50 can intentionally cause a temperature difference depending on the part of the functional lens 8. For example, the dye fixing apparatus 50 may control scanning of the laser depending on the target gradation state, for example, when performing dyeing that has gradation. The dye fixing apparatus 50 may control scanning of the laser depending on the thickness of the functional lens 8 or the like so that the temperature of each part of the lens 8 becomes a desired temperature. Further, the dye fixing apparatus 50 may heat the lens by directly irradiating the functional lens 8 with electromagnetic waves.

Further, two or more of the steps performed in each of the dye applying apparatus 10, the deposition apparatus 30, and the dye fixing apparatus 50 (for example, the first step, the second step, the third step, and the like) may be performed by a single apparatus. For example, a multifunctional resin body manufacturing apparatus may be used to perform both the second step performed by the deposition apparatus 30 and the third step performed by the dye fixing apparatus 50. In this case, for example, heating of the function-adding base body 1 in the second step and heating of the functional lens 8 in the third step may be performed using the same heating unit (for example, an infrared heater or the like). The multifunctional resin body manufacturing apparatus may automatically perform a plurality of steps (for example, from the second step to the third step) in a series of flows.

For example, in a case where the functional dye and the sublimable dye are used, there is a possibility that the optical transmittance in the specific wavelength range cannot be uniformly reduced when the region in which the optical transmittance is to be reduced in the specific wavelength range is provided in a form of gradation. For this reason, for example, a region to which the functional dye is to be applied and a region to which the sublimable dye is to be applied may be different regions. As an example, the functional dye may be fixed to the entire functional resin body, and the sublimable dye may be fixed to a partial region of the functional resin body.

Hereinafter, the present disclosure will be specifically described with reference to experimental examples which do not fall under the scope of claim 1 and comparative examples, but is not limited to the following experimental examples and comparative examples. In the following Experimental Examples 1 to 4, which do not fall under the scope of the invention, a functional dye was applied to a surface of a functional resin body, and the functional resin body to which the functional dye was applied was heated to fix the functional dye to the functional resin body, thereby obtaining a multifunctional resin body. In Comparative Examples 1 to 4 below, a multilayer film was formed on a resin body to obtain a multifunctional resin body. Wavelength transmittance and cracks of the multifunctional resin bodies obtained in the experimental examples and the comparative examples were evaluated.

### <Experimental Example 1>

In the present experimental example, a functional CR-39 lens (S-0.00) capable of reducing optical transmittance in a wavelength range of 750 nm to 760 nm as the second wavelength range was used. The functional CR-39 lens was obtained by adding a function of reducing the optical transmittance in the wavelength range of 750 to 760 nm as the second wavelength range to a CR-39 lens. In the present experimental example, a functional dye capable of absorbing light in a wavelength range of 430 nm to 500 nm as the first wavelength range was used for the functional CR-39 lens.

First, a function-adding ink used in the printer was manufactured. As the functional dye, an FDB-006 ink (Yamada Chemical Industry Co., Ltd.) capable of absorbing light in the wavelength range of 430 nm to 500 nm was used. For example, a functional dye, pure water, and a dispersant were put in a container, sufficiently stirred, so as to produce a dyeing ink. For example, Demall MS (Kao Corporation) was used as the dispersant. For example, a composition ratio of the dye, the dispersant, and pure water was 6.0% by weight of the dye, 2.5% by weight of the dispersant, and 91.5% by weight of pure water.

For example, the amount of functional dye is preferably from 0.1% to 20% by weight, more preferably from 0.5% to 10% by weight. Of course, the amount of the functional dye is not limited to the above weight percent and can be used in any amount. If the amount of the functional dye is less than 0.1% by weight, the dye is less likely to be fixed, and a desired concentration may not be obtained. If the amount of the functional dye exceeds 20% by weight, dispersibility of the functional dye may deteriorate. In addition, the functional dye needs to be one that would not be decomposed by heat, and that has heat resistance. In this experimental example, the amount of the functional dye was 6.0% by weight.

In order to disperse the functional dye, after the dispersant was sufficiently stirred, a container containing the dyeing ink was put in a container containing water for cooling, and processing was performed for a specified time using an ultrasonic homogenizer to set the functional dye to a desired particle size. Then, the dyeing ink was suction-filtered with a filter having a pore diameter of about 1 µm (glass fiber filter paper GF/B), so as to remove particles having a large particle size, dust, and the like. Thereafter, pure water was added so as to obtain a specified ink density, and if necessary, a moisturizer or a surfactant for adjusting a surface tension was added to produce a dyeing ink. In order to disperse, an ultrasonic homogenizer was used this time, whereas a microparticulating apparatus such as a bead mill may be used as well. In this manner, the function-adding ink was manufactured.

In this experimental example, an inside of an ink cartridge for the function-adding ink of a printer (EPSON PX-6250S) was thoroughly washed, and then the ink cartridge was filled with the function-adding ink containing the prepared functional dye and set in the printer. After the cleaning was repeated many times, switching of the ink was confirmed, the functional dye was applied to a base body having a thickness of 100 µm (high-quality PPC paper) by discharging the function-adding ink onto the base body with using printing software TTS-PS2 (Nidek Co., Ltd.), thereby manufacturing a function-adding base body (functional dye = 1024).

The function-adding base body obtained in this manner was used to add a function to the functional CR-39 lens. The function-adding base body was attached to a jig in a deposition apparatus (TTM-1000; produced by Nidek), so as to perform deposition operation of the functional dye to the functional CR39 lens. At this time, a distance between the surface having the dye deposited thereon of the functional CR-39 lens and the function-adding base body was set to 15 mm. After an air pressure in the deposition apparatus was lowered to 60 Pa or less by a pump, a surface temperature of the function-adding base body was heated to 200°C by a heating unit (using a halogen lamp in this experimental example). A temperature in the vicinity of the function-adding base body was measured by a temperature sensor (not shown), and the halogen lamp was turned off at the same time as reaching 200°C, so as to cause sublimation and deposition of the functional dye.

Thereafter, the air pressure in the deposition apparatus was returned to normal pressure, and then heated in an oven for 2 hours in order to fix the functional dye. A heating temperature of the oven at this time was 140°C, and the functional CR39 lens on which the functional dye was deposited was heated to fix the functional dye. In this manner, a function was added to the functional CR-39 lens to manufacture a multifunctional CR-39 lens. Thereafter, a hard coat film and an antireflection film were formed on the multifunctional CR-39 lens manufactured in this manner to complete the multifunctional CR-39 lens. For example, the hard coat film was formed by applying a silicone-based thermosetting hard coating liquid by an immersion method followed by heating. In addition, for example, the antireflection film was formed by depositing by vacuum evaporation at a degree of vacuum of 1.0×10⁻³ Pa or less and an internal temperature of a deposition machine of 70°C, forming 40 nm of ZrO₂ as a first layer, forming 60 nm of SiO₂ as a second layer, forming 120 nm of ZrO₂ as a third layer, and forming 110 nm of SiO₂ as a fourth layer, so as to form a four-layer antireflection film. After completing the multifunctional CR-39 lens, the following evaluation was performed. The results are shown in Table 1.

The functional CR-39 lens can be manufactured with using Kayasorb IR-750 ink (Nippon Kayaku Co., Ltd.), which is a functional dye capable of absorbing light in the wavelength range of 750 nm to 760 nm as the second wavelength range, to the CR-39 lens, and using a deposition apparatus in the same manner as described above to deposit the functional dye on the CR-39 lens, thereby fixing the functional dye to the CR-39 lens by heating in an oven. For example, the method for manufacturing a functional CR-39 lens may be another manufacturing method (for example, a method of kneading a functional dye capable of selectively absorbing a wavelength into the CR-39 lens, the immersion method, a method of forming a multilayer film with respect to the CR-39 lens, and the like).

### [Evaluation of Lens Transmittance]

The multifunctional CR-39 lens after the function was added using the function-adding base body was measured of spectral transmittance with Lambda 1050 (manufactured by PerkinElmer) and evaluated. In the prevent evaluation, the transmittance of the first wavelength range and the transmittance of the second wavelength range were examined.
The transmittance of the first wavelength range and the transmittance of the second wavelength range both being 50% or less: good
The transmittance of at least one of the transmittance of the first wavelength range and the transmittance of the second wavelength range being 50% or more: poor

### [Crack Evaluation]

Whether or not cracks occurred in the multifunctional CR-39 lens was visually confirmed.
No cracks: good
Cracks: poor

### <Experimental Example 2>

The function was added to the functional CR-39 lens and evaluated in the same manner as in Experimental Example 1, except that Banasorb UV-3701 ink (Orient Chemical Industries Co., Ltd.), which is a functional dye capable of absorbing light in a wavelength range of 400 nm to 410 nm as the first wavelength range, was used instead of the FDB-006 ink, which is a functional dye capable of absorbing light in the wavelength range of 430 nm to 500 nm as the first wavelength range. The results are shown in Table 1.

### <Experimental Example 3>

The function was added to the functional CR-39 lens and evaluated in the same manner as in Experimental Example 1, except that a functional CR39 lens capable of reducing optical transmittance in the wavelength range of 400 nm to 410 nm as the second wavelength range was used instead of the functional CR39 lens capable of reducing the optical transmittance in the wavelength range of 750 nm to 760 nm as the second wavelength range. The results are shown in Table 1. When manufacturing the functional CR-39 lens capable of reducing the optical transmittance in the wavelength range of 400 nm to 410 nm as the second wavelength range, the Banasorb UV-3701 ink, which is a functional dye capable of absorbing light in the wavelength range of 400 nm to 410 nm as the second wavelength range, was used.

### <Experimental Example 4>

Kayasorb IR-750 ink, which is a functional dye capable of absorbing light in a wavelength range of 750 nm to 760 nm as the first wavelength range, was used instead of the FDB-006 ink, which is a functional dye capable of absorbing light in the wavelength range of 430 nm to 500 nm as the first wavelength range. In addition, a functional CR39 lens capable of reducing optical transmittance in the wavelength range of 400 nm to 410 nm as the second wavelength range was used instead of the functional CR39 lens capable of reducing the optical transmittance in the wavelength range of 750 nm to 760 nm as the second wavelength range. Except for the above, the function was added to the functional CR-39 lens in the same manner as in Experimental Example 1. The results are shown in Table 1. When manufacturing the functional CR-39 lens capable of reducing the optical transmittance in the wavelength range of 400 nm to 410 nm as the second wavelength range, the Banasorb UV-3701 ink, which is a functional dye capable of absorbing light in the wavelength range of 400 nm to 410 nm as the second wavelength range, was used.

### <Comparative Example 1>

Instead of manufacturing a multifunctional CR-39 lens using the vapor phase transfer dyeing method, a multilayer film was formed on a CR-39 lens on which a hard coat film was formed as in the related art, thereby manufacturing a multifunctional CR-39 lens. In Comparative Example 1, similar as in Experimental Example 1, a multifunctional CR-39 lens capable of reducing light in respective wavelength ranges of 430 nm to 500 nm and 750 nm to 760 nm as the first wavelength range and the second wavelength range was manufactured. First, a CR-39 lens was prepared, and deposition was performed by vacuum evaporation at a degree of vacuum of 1.0×10⁻³ Pa or less and an internal temperature of a deposition machine of 70°C, thereby forming a multilayer film on the CR-39. As a configuration of the multilayer film, a 24-layer film was formed on a convex surface of the CR-39, and a six-layer film was formed on a concave surface thereof. A configuration of the multilayer film is shown in Table 3. By forming the multilayer film, the manufactured multifunctional CR-39 lens was evaluated based on the same evaluation criteria as in Experimental Example 1. The results are shown in Table 2.

### <Comparative Example 2>

Instead of manufacturing a multifunctional CR-39 lens using the vapor phase transfer dyeing method, a multilayer film was formed on a CR-39 lens on which a hard coat film was formed as in the related art, thereby manufacturing a multifunctional CR-39 lens. In Comparative Example 2, similar as in Experimental Example 2, a multifunctional CR-39 lens capable of reducing respective wavelength ranges of 400 nm to 410 nm and 750 nm to 760 nm as the first wavelength range and the second wavelength range was manufactured. First, a CR-39 lens was prepared, and deposition was performed by vacuum evaporation at a degree of vacuum of 1.0×10⁻³ Pa or less and an internal temperature of a deposition machine of 70°C, thereby forming a multilayer film on the CR-39. As a configuration of the multilayer film, a four-layer film was formed on a convex surface of the CR-39, and a six-layer film was formed on a concave surface thereof. A configuration of the multilayer film is shown in Table 4. By forming the multilayer film, the manufactured multifunctional CR-39 lens was evaluated based on the same evaluation criteria as in Experimental Example 1. The results are shown in Table 2.

### <Comparative Example 3>

Instead of manufacturing a multifunctional CR-39 lens using the vapor phase transfer dyeing method, a multilayer film was formed on a CR-39 lens on which a hard coat film was formed as in the related art, thereby manufacturing a multifunctional CR-39 lens. In Comparative Example 3, similar as in Experimental Example 3, a multifunctional CR-39 lens capable of reducing respective wavelength ranges of 430 nm to 500 nm and 400 nm to 410 nm as the first wavelength range and the second wavelength range was manufactured. First, a CR-39 lens was prepared, and deposition was performed by vacuum evaporation at a degree of vacuum of 1.0×10⁻³ Pa or less and an internal temperature of a deposition machine of 70°C, thereby forming a multilayer film on the CR-39. As a configuration of the multilayer film, a four-layer film was formed on a convex surface of the CR-39, and a 24-layer film was formed on a concave surface thereof. A configuration of the multilayer film is shown in Table 5. By forming the multilayer film, the manufactured multifunctional CR-39 lens was evaluated based on the same evaluation criteria as in Experimental Example 1. The results are shown in Table 2.

**Table 1**

| | Wavelength range of functional dye (first wavelength range) | Wavelength range of functional lens (second wavelength range) | Transmittance of functional lens (before fixing functional dye) | Transmittance of multifunctional lens (after fixing functional dye) | Transmittance evaluation | Crack evaluation |
|---|---|---|---|---|---|---|
| Experimental Example 1 | 430nm to 500nm | 750nm to 760nm | 430nm: 74.52% | 430nm: 0.02% | Good | Good |
| | | | 500nm: 86.31% | 500nm: 13.66% | | |
| | | | 750nm: 26.81% | 750nm: 15.25% | | |
| | | | 760nm: 26.66% | 760nm: 14.83% | | |
| Experimental Example 2 | 400nm to 410nm | 750nm to 760nm | 400nm: 20.65% | 400nm: 0.84% | Good | Good |
| | | | 410nm: 51.77% | 410nm: 12.76% | | |
| | | | 750nm: 26.81% | 750nm: 31.82% | | |
| | | | 760nm: 26.66% | 760nm: 31.65% | | |
| Experimental Example 3 | 430nm to 500nm | 400nm to 410nm | 400nm: 0.61% | 400nm: 0.09% | Good | Good |
| | | | 410nm: 9.58% | 410nm: 0.85% | | |
| | | | 430nm: 85.31% | 430nm: 0.22% | | |
| | | | 500nm: 91.49% | 500nm: 25.95% | | |
| Experimental Example 4 | 750nm to 760nm | 400nm to 410nm | 400nm: 0.61% | 400nm: 0.46% | Good | Good |
| | | | 410nm: 9.58% | 410nm: 8.14% | | |
| | | | 750nm: 92.29% | 750nm: 28.15% | | |
| | | | 760nm: 92.47% | 760nm: 27.88% | | |

As shown in Table 1, it was confirmed that the multifunctional CR-39 lenses manufactured in Experimental Examples 1 to 4 have a function of reducing the optical transmittance in each of the first wavelength range and the second wavelength range. That is, in Experimental Examples 1 to 4, it was confirmed that by fixing the functional dye to the functional CR-39, it is possible to add the function of the functional dye compared to the transmittance of the functional CR-39 before fixing the functional dye. In addition, it was confirmed that the multifunctional CR-39 lenses manufactured in Experimental Examples 1 to 4 were capable of manufacturing an excellent multifunctional CR-39 lens without generating cracks.

**Table 2**

| | First wavelength range and second wavelength range | | Transmittance of multifunctional lens | Transmittance evaluation | Crack evaluation |
|---|---|---|---|---|---|
| Comparative Example 1 | 430nm to 500nm | 750nm to 760nm | 430nm: 0.01% | Good | Poor |
| | | | 500nm: 0.73% | | |
| | | | 750nm: 24.26% | | |
| | | | 760nm: 28.07% | | |
| Comparative Example 2 | 400nm to 410nm | 750nm to 760nm | 400nm: 9.83% | Good | Poor |
| | | | 410nm: 48.74% | | |
| | | | 750nm: 20.92% | | |
| | | | 760nm: 22.98% | | |
| Comparative Example 3 | 430nm to 500nm | 400nm to 410nm | 400nm: 14.59% | Good | Poor |
| | | | 410nm: 0.09% | | |
| | | | 430nm: 0.01% | | |
| | | | 500nm: 0.74% | | |

As shown in Table 2, it was confirmed that the multifunctional CR-39 lenses manufactured in Comparative Examples 1 to 3 have a function of reducing the optical transmittance in each of the first wavelength range and the second wavelength range, but generated cracks.

**Table 3**

| Convex surface | | | | | |
|---|---|---|---|---|---|
| Film forming order | Deposited matter | Film thickness λ=550nm | Film forming order | Deposited matter | Film thickness λ=550nm |
| 1st layer | TiO₂ | 0.825λ | 13rd layer | TiO₂ | 0.754λ |
| 2nd layer | SiO₂ | 0.451λ | 14th layer | SiO₂ | 0.846λ |
| 3rd layer | TiO₂ | 0.770λ | 15th layer | TiO₂ | 0.754λ |
| 4th layer | SiO₂ | 0.837λ | 16th layer | SiO₂ | 0.720λ |
| 5th layer | TiO₂ | 0.733λ | 17th layer | TiO₂ | 0.791λ |
| 6th layer | SiO₂ | 0.691λ | 18th layer | SiO₂ | 0.789λ |
| 7th layer | TiO₂ | 0.766λ | 19th layer | TiO₂ | 0.764λ |
| 8th layer | SiO₂ | 0.846λ | 20th layer | SiO₂ | 0.790λ |
| 9th layer | TiO₂ | 0.754λ | 21st layer | TiO₂ | 0.690λ |
| 10th layer | SiO₂ | 0.846λ | 22nd layer | SiO₂ | 0.713λ |
| 11st layer | TiO₂ | 0.754λ | 23rd layer | TiO₂ | 0.740λ |
| 12nd layer | SiO₂ | 0.846λ | 24th layer | SiO₂ | 1.478λ |

| Concave surface | | | | | |
|---|---|---|---|---|---|
| Film forming order | Deposited matter | Film thickness λ=550nm | Film forming order | Deposited matter | Film thickness λ=550nm |
| 1st layer | TiO₂ | 4.090λ | 4th layer | SiO₂ | 4.090λ |
| 2nd layer | SiO₂ | 4.090λ | 5th layer | TiO₂ | 4.090λ |
| 3rd layer | TiO₂ | 4.090λ | 6th layer | SiO₂ | 5.450λ |

**Table 4**

| Convex surface | | | | | |
|---|---|---|---|---|---|
| Film forming order | Deposited matter | Film thickness λ=550nm | Film forming order | Deposited matter | Film thickness λ=550nm |
| 1st layer | TiO₂ | 0.210λ | 3rd layer | TiO₂ | 1.960λ |
| 2nd layer | SiO₂ | 0.370λ | 4th layer | SiO₂ | 0.910λ |

| Concave surface | | | | | |
|---|---|---|---|---|---|
| Film forming order | Deposited matter | Film thickness λ=550nm | Film forming order | Deposited matter | Film thickness λ=550nm |
| 1st layer | TiO₂ | 3.651λ | 5th layer | TiO₂ | 4.696λ |
| 2nd layer | SiO₂ | 3.660λ | 6th layer | SiO₂ | 3.639λ |
| 3rd layer | TiO₂ | 4.557λ | 7th layer | TiO₂ | 4.650λ |
| 4th layer | SiO₂ | 3.777λ | 8th layer | SiO₂ | 5.588λ |

**Table 5**

| Convex surface | | | | | |
|---|---|---|---|---|---|
| Film forming order | Deposited matter | Film thickness λ=550nm | Film forming order | Deposited matter | Film thickness λ=550nm |
| 1st layer | TiO₂ | 0.210λ | 3rd layer | TiO₂ | 1.960λ |
| 2nd layer | SiO₂ | 0.370λ | 4th layer | SiO₂ | 0.910λ |

| Concave surface | | | | | |
|---|---|---|---|---|---|
| Film forming order | Deposited matter | Film thickness λ=550nm | Film forming order | Deposited matter | Film thickness λ=550nm |
| 1st layer | TiO₂ | 0.825λ | 13rd layer | TiO₂ | 0.754λ |
| 2nd layer | SiO₂ | 0.451λ | 14th layer | SiO₂ | 0.846λ |
| 3rd layer | TiO₂ | 0.770λ | 15th layer | TiO₂ | 0.754λ |
| 4th layer | SiO₂ | 0.837λ | 16th layer | SiO₂ | 0.720λ |
| 5th layer | TiO₂ | 0.733λ | 17th layer | TiO₂ | 0.791λ |
| 6th layer | SiO₂ | 0.691λ | 18th layer | SiO₂ | 0.789λ |
| 7th layer | TiO₂ | 0.766λ | 19th layer | TiO₂ | 0.764λ |
| 8th layer | SiO₂ | 0.846λ | 20th layer | SiO₂ | 0.790λ |
| 9th layer | TiO₂ | 0.754λ | 21st layer | TiO₂ | 0.690λ |
| 10th layer | SiO₂ | 0.846λ | 22nd layer | SiO₂ | 0.713λ |
| 11st layer | TiO₂ | 0.754λ | 23rd layer | TiO₂ | 0.740λ |
| 12nd layer | SiO₂ | 0.846λ | 24th layer | SiO₂ | 1.478λ |

### Reference Signs List

- 1: Function-adding base body
- 2: Base body
- 8: Functional lens
- 10: Dye applying apparatus
- 11: Ink jet printer
- 12: Personal computer
- 13: Ink cartridge
- 14: Mounting unit
- 15: Ink jet head
- 16: Control unit
- 20: Memory
- 30: Deposition apparatus
- 50: Dye fixing apparatus
- 100: Manufacturing system
- 101: Second function-adding base body
- 102: Base body
- 108: Lens

## Claims

1. A method for manufacturing a multifunctional resin body that reduces optical transmittance in a plurality of wavelength ranges, the method comprising:
- a first step of applying a first functional dye, which absorbs light in a first wavelength range and has sublimability, to a base body (2) to obtain a first function-adding base body (1);
- a second step of setting the first function-adding base body (1) obtained in the first step to face a functional resin body (8) having a function of reducing optical transmittance in a second wavelength range being a wavelength range different from the first wavelength range, of heating the first function-adding base body (1) to sublimate the first functional dye applied to the first function-adding base body (1), and of depositing the first functional dye on the functional resin body (8); and
- a third step of heating the functional resin body (8) on which the first functional dye is deposited in the second step to fix the first functional dye on the functional resin body (8),
- wherein the multifunctional resin body that reduces optical transmittance in a plurality of wavelength ranges is obtained by adding a function of reducing optical transmittance in the first wavelength range to the functional resin body (8) with using the first functional dye,
wherein the method further comprises:
- a fourth step of applying a second functional dye, which absorbs light in the second wavelength range, to a base body (102) to obtain a second function-adding base body (101);
- a fifth step of setting the second function-adding base body (101) obtained in the fourth step to face a resin body (108), of heating the second function-adding base body (101) to sublimate the second functional dye applied to the second function-adding base body (101), and of depositing the second functional dye on the resin body (108); and
- a sixth step of heating the resin body (108) on which the second functional dye is deposited in the fifth step to fix the second functional dye on the resin body (108),
- wherein the functional resin body (8), on which the first functional dye deposits in the second step, is obtained by performing the fourth to sixth steps to ad a function of reducing the optical transmittance in the second wavelength range to the resin body (108) with using the second functional dye.

2. The method for manufacturing the multifunctional resin body according to claim 1,
- wherein the first step includes further applying a third functional dye, which absorbs light in a third wavelength range being a wavelength range different from the first wavelength range and the second wavelength range, to the base body (2) to obtain the first function-adding base body (1),
- the second step includes sublimating the third functional dye applied to the first function-adding base body (1), and depositing the third functional dye on the functional resin body (8),
- the third step includes heating the functional resin body (8) on which the third functional dye is deposited in the second step to fix the third functional dye on the functional resin body (8), and
- the multifunctional resin body that reduces optical transmittance in a plurality of wavelength ranges is obtained by adding a function of reducing optical transmittance in the first wavelength range and the third wavelength range to the functional resin body (8).

3. The method for manufacturing the multifunctional resin body according to claim 1 or 2,
- wherein the first step includes obtaining the first function-adding base body (1) to which a sublimable dye for dyeing the functional resin body (8) is further applied,
- the second step includes sublimating the sublimable dye applied to the first function-adding base body (1), and depositing the sublimable dye on the functional resin body (8),
- the third step includes heating the functional resin body (8) on which the sublimable dye is deposited in the second step to fix the sublimable dye on the functional resin body (8), and a function of reducing optical transmittance in a plurality of wavelength ranges is added to the functional resin body (8), and the functional resin body (8) is dyed.

4. The method for manufacturing the multifunctional resin body according to claim 3, wherein the sublimable dye includes at least three dyes of red, blue, and yellow.

5. The method for manufacturing the multifunctional resin body according to any one of claims 1 to 4, wherein one of the first wavelength range and the second wavelength range is a wavelength range of a blue region.

6. The method for manufacturing the multifunctional resin body according to any one of claims 1 to 5, wherein one of the first wavelength range and the second wavelength range is a wavelength range of an ultraviolet region.

7. The method for manufacturing the multifunctional resin body according to any one of claims 1 to 6, wherein the first step includes printing a function-adding ink containing the first functional dye onto the base body (2) with using a printing apparatus to obtain the first function-adding base body (1).

8. The method for manufacturing the multifunctional resin body according to any one of claims 1 to 7, wherein the second step includes setting the first function-adding base body (1) obtained in the first step to face the functional resin body (8) in a non-contact manner, heating the first function-adding base body (1) to sublimate the first functional dye applied to the first function-adding base body (1), and depositing the first functional dye on the functional resin body (8).

9. The method for manufacturing the multifunctional resin body according to any one of claims 1 to 8, wherein the functional resin body (8) is a functional lens.

## Patentansprüche

1. Verfahren zur Herstellung eines multifunktionalen Harzkörpers, der optische Transmission in einer Mehrzahl von Wellenlängenbereichen reduziert, wobei das Verfahren umfasst:
- einen ersten Schritt zum Aufbringen eines ersten funktionellen Farbstoffs, der Licht in einem ersten Wellenlängenbereich absorbiert und Sublimierbarkeit umfasst, auf einen Grundkörper (2) zum Erhalten eines ersten funktionsaddierenden Grundkörpers (1);
- einen zweiten Schritt zum Einstellen des im ersten Schritt erhaltenen ersten funktionsaddierenden Grundkörpers (1) zum Zuwenden eines funktionellen Harzkörpers (8) mit einer Funktion zum Reduzieren optischer Transmission in einem zweiten Wellenlängenbereich, der ein Wellenlängenbereich ist, der sich von dem ersten Wellenlängenbereich unterscheidet, zum Erwärmen des ersten funktionsaddierenden Grundkörpers (1), um den auf den ersten funktionsaddierenden Grundkörper (1) aufgebrachten ersten funktionellen Farbstoff zu sublimieren, und zum Abscheiden des ersten funktionellen Farbstoffs an den funktionellen Harzkörper (8); und
- einen dritten Schritt zum Erwärmen des funktionellen Harzkörpers (8), auf den der erste funktionelle Farbstoff in dem zweiten Schritt abgeschieden wurde, um den ersten funktionellen Farbstoff an den funktionellen Harzkörper (8) zu fixieren,
- wobei der multifunktionale Harzkörper, der optische Transmission in einer Mehrzahl von Wellenlängenbereichen reduziert, durch Hinzufügen einer Funktion zum Reduzieren optischer Transmission in dem ersten Wellenlängenbereich zu dem funktionalen Harzkörper (8) unter Verwendung des ersten funktionalen Farbstoffs erhalten wird,
wobei das Verfahren ferner umfasst:
- einen vierten Schritt zum Aufbringen eines zweiten funktionellen Farbstoffs, der Licht in dem zweiten Wellenlängenbereich absorbiert, auf einen Grundkörper (102) zum Erhalten eines zweiten funktionsaddierenden Grundkörpers (101);
- einen fünften Schritt zum Einstellen des im vierten Schritt erhaltenen zweiten funktionsaddierenden Grundkörpers (101) zum Zuwenden eines Harzkörpers (108) zum Erwärmen des zweiten funktionsaddierenden Grundkörpers (101), um den auf den zweiten funktionsaddierenden Grundkörper (101) aufgebrachten zweiten funktionellen Farbstoff zu sublimieren, und zum Aufbringen des zweiten funktionellen Farbstoffs auf den Harzkörper (108); und
- einen sechsten Schritt zum Erwärmen des Harzkörpers (108), auf den der zweite funktionelle Farbstoff in dem fünften Schritt abgeschieden wurde, um den zweiten funktionellen Farbstoff auf den Harzkörper (108) zu fixieren,
- wobei der funktionelle Harzkörper (8), auf den der erste funktionelle Farbstoff im zweiten Schritt abscheidet, durch Ausführen des vierten bis sechsten Schritts erhalten wird, um dem Harzkörper (108) unter Verwendung des zweiten funktionellen Farbstoffs eine Funktion zum Reduzieren der optischen Transmission im zweiten Wellenlängenbereich zu addieren.

2. Verfahren zur Herstellung des multifunktionalen Harzkörpers nach Anspruch 1,
- wobei der erste Schritt ferner Aufbringen eines dritten funktionellen Farbstoffs, der Licht in einem dritten Wellenlängenbereich absorbiert, der ein Wellenlängenbereich ist, der sich von dem ersten Wellenlängenbereich und dem zweiten Wellenlängenbereich unterscheidet, auf den Grundkörper (2) umfasst, um den ersten funktionsaddierenden Grundkörper (1) zu erhalten,
- der zweite Schritt Sublimieren des dritten funktionellen Farbstoffs, der auf den ersten funktionsaddierenden Grundkörper (1) aufgebracht wurde, und Abscheiden des dritten funktionellen Farbstoffs auf den funktionellen Harzkörper (8) umfasst,
- der dritte Schritt Erwärmen des funktionellen Harzkörpers (8) umfasst, auf den der dritte funktionelle Farbstoff im zweiten Schritt abgeschieden wurde, um den dritten funktionellen Farbstoff auf den funktionellen Harzkörper (8) zu fixieren, und
- der multifunktionale Harzkörper, der optische Transmission in einer Mehrzahl von Wellenlängenbereichen reduziert, durch Hinzufügen einer Funktion zum Reduzieren optischer Transmission in dem ersten Wellenlängenbereich und dem dritten Wellenlängenbereich zu dem funktionellen Harzkörper (8) erhalten wird.

3. Verfahren zur Herstellung des multifunktionalen Harzkörpers nach Anspruch 1 oder 2,
- wobei der erste Schritt Erhalten des ersten funktionsaddierenden Grundkörpers (1) umfasst, auf den ferner ein sublimierbarer Farbstoff zum Färben des funktionellen Harzkörpers (8) aufgebracht wird,
- der zweite Schritt Sublimieren des auf den ersten funktionsaddierenden Grundkörper (1) aufgebrachten sublimierbaren Farbstoffs und Abscheiden des sublimierbaren Farbstoffs auf den funktionellen Harzkörper (8) umfasst,
- der dritte Schritt Erwärmen des funktionellen Harzkörpers (8), auf den der sublimierbare Farbstoff im zweiten Schritt abgeschieden wurde, um den sublimierbaren Farbstoff auf den funktionellen Harzkörper (8) zu fixieren, umfasst, und wobei eine Funktion zum Reduzieren optischer Transmission in einer Mehrzahl von Wellenlängenbereichen zu dem funktionellen Harzkörper (8) hinzugefügt wird und der funktionelle Harzkörper (8) eingefärbt wird.

4. Verfahren zur Herstellung des multifunktionalen Harzkörpers nach Anspruch 3, wobei der sublimierbare Farbstoff mindestens drei Farbstoffe von Rot, Blau und Gelb, umfasst.

5. Verfahren zur Herstellung des multifunktionalen Harzkörpers nach einem der Ansprüche 1 bis 4, wobei einer des ersten Wellenlängenbereichs und des zweiten Wellenlängenbereichs ein Wellenlängenbereich eines blauen Bereichs ist.

6. Verfahren zur Herstellung des multifunktionalen Harzkörpers nach einem der Ansprüche 1 bis 5, wobei einer des ersten Wellenlängenbereichs und des zweiten Wellenlängenbereichs ein Wellenlängenbereich eines ultravioletten Bereichs ist.

7. Verfahren zur Herstellung des multifunktionalen Harzkörpers nach einem der Ansprüche 1 bis 6, wobei der erste Schritt Drucken einer funktionsaddierenden Tinte, die den ersten funktionellen Farbstoff enthält, auf den Grundkörper (2) unter Verwendung einer Druckvorrichtung umfasst, um den ersten funktionsaddierenden Grundkörper (1) zu erhalten.

8. Verfahren zur Herstellung des multifunktionalen Harzkörpers nach einem der Ansprüche 1 bis 7, wobei der zweite Schritt Einstellen des im ersten Schritt erhaltenen ersten funktionsaddierenden Grundkörpers (1) zum Zuwenden des funktionellen Harzkörpers (8) in einer kontaktlosen Weise, Erwärmen des ersten funktionsaddierenden Grundkörpers (1) zum Sublimieren des auf den ersten funktionsaddierenden Grundkörper (1) aufgebrachten ersten funktionellen Farbstoffs und Abscheiden des ersten funktionellen Farbstoffs auf den funktionellen Harzkörper (8) umfasst.

9. Verfahren zur Herstellung des multifunktionalen Harzkörpers nach einem der Ansprüche 1 bis 8, wobei der funktionelle Harzkörper (8) eine funktionelle Linse ist.

## Revendications

1. Procédé de fabrication d'un corps en résine multifonctionnelle qui réduit la transmission optique dans une pluralité de plages de longueurs d'onde, le procédé comprenant :
- une première étape d'application d'un premier colorant fonctionnel, qui absorbe la lumière dans une première plage de longueurs d'onde et présente une aptitude à la sublimation, à un corps de base (2) pour obtenir un premier corps de base d'ajout de fonction (1) ;
- une deuxième étape de mise en place du premier corps de base d'ajout de fonction (1) obtenu dans la première étape pour faire face à un corps en résine fonctionnelle (8) ayant une fonction de réduction de la transmission optique dans une deuxième plage de longueurs d'onde qui est une plage de longueurs d'onde différente de la première plage de longueurs d'onde, de chauffage du premier corps de base d'ajout de fonction (1) pour sublimer le premier colorant fonctionnel appliqué au premier corps de base d'ajout de fonction (1), et de dépôt du premier colorant fonctionnel sur le corps en résine fonctionnelle (8) ; et
- une troisième étape de chauffage du corps en résine fonctionnelle (8) sur lequel le premier colorant fonctionnel est déposé dans la deuxième étape pour fixer le premier colorant fonctionnel sur le corps en résine fonctionnelle (8),
- dans lequel le corps en résine multifonctionnelle qui réduit la transmission optique dans une pluralité de plages de longueurs d'onde est obtenu en ajoutant une fonction de réduction de la transmission optique dans la première plage de longueurs d'onde au corps en résine fonctionnelle (8) en utilisant le premier colorant fonctionnel,
dans lequel le procédé comprend en outre :
- une quatrième étape d'application d'un deuxième colorant fonctionnel, qui absorbe la lumière dans la deuxième plage de longueurs d'onde, à un corps de base (102) pour obtenir un second corps de base d'ajout de fonction (101) ;
- une cinquième étape de mise en place du second corps de base d'ajout de fonction (101) obtenu dans la quatrième étape pour faire face à un corps en résine (108), de chauffage du second corps de base d'ajout de fonction (101) pour sublimer le deuxième colorant fonctionnel appliqué au second corps de base d'ajout de fonction (101) et de dépôt du deuxième colorant fonctionnel sur le corps en résine (108) ; et
- une sixième étape de chauffage du corps en résine (108) sur lequel le deuxième colorant fonctionnel est déposé dans la cinquième étape pour fixer le deuxième colorant fonctionnel sur le corps en résine (108),
- dans lequel le corps en résine fonctionnelle (8), sur lequel le premier colorant fonctionnel se dépose dans la deuxième étape, est obtenu en réalisant les quatrième à sixième étapes pour ajouter une fonction de réduction de la transmission optique dans la deuxième plage de longueurs d'onde au corps en résine (108) en utilisant le deuxième colorant fonctionnel.

2. Procédé de fabrication du corps en résine multifonctionnelle selon la revendication 1,
- dans lequel la première étape comprend en outre l'application d'un troisième colorant fonctionnel, qui absorbe la lumière dans une troisième plage de longueurs d'onde qui est une plage de longueurs d'onde différente de la première plage de longueurs d'onde et de la deuxième plage de longueurs d'onde, au corps de base (2) pour obtenir le premier corps de base d'ajout de fonction (1),
- la deuxième étape comprend la sublimation du troisième colorant fonctionnel appliqué au premier corps de base d'ajout de fonction (1), et le dépôt du troisième colorant fonctionnel sur le corps en résine fonctionnelle (8),
- la troisième étape comprend le chauffage du corps en résine fonctionnelle (8) sur lequel le troisième colorant fonctionnel est déposé dans la deuxième étape pour fixer le troisième colorant fonctionnel sur le corps en résine fonctionnelle (8), et
- le corps en résine multifonctionnelle qui réduit la transmission optique dans une pluralité de plages de longueurs d'onde est obtenu en ajoutant une fonction de réduction de la transmission optique dans la première plage de longueurs d'onde et la troisième plage de longueurs d'onde au corps en résine fonctionnelle (8).

3. Procédé de fabrication du corps en résine multifonctionnelle selon la revendication 1 ou 2,
- dans lequel la première étape comprend l'obtention du premier corps de base d'ajout de fonction (1) auquel un colorant sublimable pour colorer le corps en résine fonctionnelle (8) est en outre appliqué,
- la deuxième étape comprend la sublimation du colorant sublimable appliqué au premier corps de base d'ajout de fonction (1), et le dépôt du colorant sublimable sur le corps en résine fonctionnelle (8),
- la troisième étape comprend le chauffage du corps en résine fonctionnelle (8) sur lequel le colorant sublimable est déposé dans la deuxième étape pour fixer le colorant sublimable sur le corps en résine fonctionnelle (8), et une fonction de réduction de la transmission optique dans une pluralité de plages de longueurs d'onde est ajoutée au corps en résine fonctionnelle (8), et le corps en résine fonctionnelle (8) est teint.

4. Procédé de fabrication du corps en résine multifonctionnelle selon la revendication 3, dans lequel le colorant sublimable comprend au moins trois colorants rouge, bleu et jaune.

5. Procédé de fabrication du corps en résine multifonctionnelle selon l'une quelconque des revendications 1 à 4, dans lequel l'une de la première plage de longueurs d'onde et de la deuxième plage de longueurs d'onde est une plage de longueurs d'onde d'une région bleue.

6. Procédé de fabrication du corps en résine multifonctionnelle selon l'une quelconque des revendications 1 à 5, dans lequel l'une de la première plage de longueurs d'onde et de la deuxième plage de longueurs d'onde est une plage de longueurs d'onde d'une région ultraviolette.

7. Procédé de fabrication du corps en résine multifonctionnelle selon l'une quelconque des revendications 1 à 6, dans lequel la première étape comprend l'impression d'une encre d'ajout de fonction contenant le premier colorant fonctionnel sur le corps de base (2) en utilisant un appareil d'impression pour obtenir le premier corps de base d'ajout de fonction (1).

8. Procédé de fabrication du corps en résine multifonctionnelle selon l'une quelconque des revendications 1 à 7, dans lequel la deuxième étape comprend la mise en place du premier corps de base d'ajout de fonction (1) obtenu dans la première étape pour faire face au corps en résine fonctionnelle (8) sans contact, le chauffage du premier corps de base d'ajout de fonction (1) pour sublimer le premier colorant fonctionnel appliqué au premier corps de base d'ajout de fonction (1), et le dépôt du premier colorant fonctionnel sur le corps en résine fonctionnelle (8).

9. Procédé de fabrication du corps en résine multifonctionnelle selon l'une quelconque des revendications 1 à 8, dans lequel le corps en résine fonctionnelle (8) est une lentille fonctionnelle.
